# EUROPEAN PATENT APPLICATION

(11) **EP 2 775 721 A2**
(43) Date of publication of application: **10.09.2014**
(21) Application number: 14157405.3
(22) Date of filing: 03.03.2014
(51) Int. Cl.: H04N 9/31

(54) **Projector**

(30) Priority: 05.03.2013 JP 2013042489; 05.03.2013 JP 2013042490
(71) Applicant: Funai Electric Co., Ltd., Daito-shi, Osaka 574-0013 (JP)
(72) Inventor: Akamatsu, Kenji, Daito-shi, Osaka 574-0013 (JP)
(74) Representative: Grünecker, Kinkeldey, Stockmair & Schwanhäusser

(57) **Abstract**

A projector includes a projection portion (20) projecting an image (90) on a screen (80, 380) by scanning a laser beam emitted from a laser beam generation portion (24, 25, 26), a light detecting portion (34) detecting at least the laser beam reflected by a detection object (1), and a control portion (31, 231, 431) configured to perform control of accepting an apparatus operation on the basis of a detection result of the laser beam reflected by the detection object obtained by the light detecting portion and control of detecting the breakage of the screen on the basis of a detection result of the laser beam reflected by the screen obtained by the light detecting portion.

## Description

### BACKGROUND OF THE INVENTION

### Field of the Invention

The present invention relates to a projector, and more particularly, it relates to a projector including a projection portion projecting an image on a screen by scanning a laser beam.

### Description of the Background Art

A projection display apparatus including a projection portion projecting an image on a screen by scanning a laser beam is known in general, as disclosed in Japanese Patent Laying-Open No. 2008-180921, for example.

Japanese Patent Laying-Open No. 2008-180921 discloses a projection display apparatus (projector) integrally including a housing into which a light source portion is built, having a light-shielding function and a transmissive screen arranged on the front side of the housing. In the projection display apparatus described in Japanese Patent Laying-Open No. 2008-180921, a light detector (light sensor) detecting part of image light incident on the transmissive screen, propagating into the screen, leaking into the housing, which is so-called return light, is set in the housing. This projection display apparatus is configured to detect the breakage of the transmissive screen, the positional displacement of the transmissive screen, the flexural deformation of the transmissive screen, etc. on the basis of the return light detected by the light detector.

In the projection display apparatus (projector) described in Japanese Patent Laying-Open No. 2008-180921, the light detector (light sensor) is conceivably provided in an apparatus body in order to detect the condition of the transmissive screen (the breakage, positional displacement, flexural deformation, etc. of the screen). When the projection display apparatus described in Japanese Patent Laying-Open No. 2008-180921 is applied to a projector having a virtual user interface (VUI operation) function allowing a user to perform an apparatus operation through an operation screen projected on a screen, for example, however, in addition to the dedicated light detector (light sensor) for detecting the condition (the presence or absence of breakage, positional displacement, flexural deformation, etc.) of the screen, a light detector for the VUI operation detecting the VUI operation performed by the user must be separately provided. Therefore, the number of components constituting the projector is disadvantageously increased.

### SUMMARY OF THE INVENTION

The present invention has been proposed in order to solve the aforementioned problem, and an object of the present invention is to provide a projector capable of easily detecting the broken condition of a screen while suppressing an increase in the number of components of an apparatus body.

A projector according to an aspect of the present invention includes a laser beam generation portion emitting a laser beam, a projection portion projecting an image on a screen by scanning the laser beam emitted from the laser beam generation portion, a light detecting portion detecting at least the laser beam reflected by a detection object, and a control portion configured to perform control of accepting an apparatus operation on the basis of a detection result of the laser beam reflected by the detection object obtained by the light detecting portion and control of detecting the breakage of the screen on the basis of a detection result of the laser beam reflected by the screen obtained by the light detecting portion. According to the present invention, the "breakage of the screen" indicates a wide concept which is intended to include a state where there is a portion (where a normal display state cannot be maintained) unsuitable for projection of the image in the screen, such as a breakage or crack (loss or defect) in the screen or a contaminated portion resulting from the attachment of extraneous material such as dust on a surface of the screen.

As hereinabove described, the projector according to the aspect of the present invention includes the light detecting portion detecting at least the laser beam reflected by the detection object and the control portion configured to perform control of accepting the apparatus operation on the basis of the detection result of the laser beam reflected by the detection object obtained by the light detecting portion and control of detecting the breakage of the screen on the basis of the detection result of the laser beam reflected by the screen obtained by the light detecting portion, whereby the single light detecting portion allows a user to perform the apparatus operation on the projector (apparatus body) with the detection object and allows the user to detect the presence or absence of breakage in the screen. Thus, the broken condition of the screen can be easily detected while an increase in the number of components of the apparatus body is suppressed, unlike the case where the light detecting portion for the apparatus operation (for detection of the detection object) and a light detecting portion for detection of the breakage of the screen are provided separately.

The aforementioned projector according to the aspect preferably further includes a storage portion previously storing the reference reflection amount of the laser beam reflected by the screen, detected by the light detecting portion, and the control portion is preferably configured to perform control of determining the breakage of the screen on the basis of a comparison result of the actual reflection amount of the laser beam reflected by the screen, detected by the light detecting portion in a state where the projection portion projects the image on the screen and the reference reflection amount stored in the storage portion. According to this structure, the reflection amount (actual reflection amount) of the laser beam from the screen can be quantitatively evaluated on the basis of the reflection amount of the laser beam from the screen previously stored in the storage portion as the reference reflection amount when the breakage is detected, and hence the presence or absence of breakage in the screen can be easily detected on the basis of the reference reflection amount in the storage portion.

In the aforementioned structure further including the storage portion storing the reference reflection amount of the laser beam, the projector is preferably configured to previously acquire the reference reflection amount as the reflection amount of the screen without a breakage by emitting the laser beam to the screen without a breakage and detecting the laser beam reflected by the screen through the light detecting portion, and the control portion is preferably configured to perform control of determining the breakage of the screen on the basis of the comparison result of the actual reflection amount of the laser beam reflected by the screen, detected by the light detecting portion in the state where the projection portion projects the image on the screen and the reference reflection amount. According to this structure, the reflection amount (actual reflection amount) of the laser beam from the screen can be compared with the reflection amount (reference reflection amount) of the laser beam from the screen without a breakage when the breakage is detected, and hence the presence or absence of breakage in the screen can be reliably and easily detected.

In the aforementioned structure further including the storage portion storing the reference reflection amount of the laser beam, the control portion is preferably configured to determine that there is a breakage in the screen when determining that a state where there is a difference between the reference reflection amount and the actual reflection amount continues for at least a prescribed period of time. According to this structure, the erroneous detection of the broken condition of the screen resulting from detection of the laser beam reflected by the detection object temporarily arranged on the screen in order to perform the apparatus operation on the apparatus body 10 can be reliably avoided when the control portion detects the breakage. Thus, the broken condition of the screen can be more accurately detected, effectively utilizing the light detecting portion configured to detect the laser beam reflected by the detection object used for the apparatus operation.

In the aforementioned projector according to the aspect, the control portion is preferably configured to perform control of reducing the luminance of the laser beam emitted to a broken portion of the screen in the image projected on the screen or control of stopping the emission of the laser beam to the broken portion of the screen and perform control of continuing the projection of the image on a portion of the screen other than the broken portion when determining that there is a breakage in the screen. According to this structure, even when there is a breakage in the screen, the projection of the image to be projected can be continued without complete cancellation although the luminance of the laser beam emitted to the broken portion is reduced or the emission of the laser beam is stopped. Thus, a situation in which the image or a picture to be projected is not projected (displayed) at all due to the partial breakage (loss) of the screen can be avoided. For example, a situation in which a normal electronic advertisement, urgent information displayed when a disaster strikes, etc. are not displayed at all due to the partial breakage (loss) of the screen is avoided, and hence the projector according to the present invention can be beneficially used. Furthermore, the projector can continue to be used until the repair of the screen, and hence the projector according to the present invention can be beneficially used also in this respect.

The aforementioned projector according to the aspect preferably further includes an impact detecting portion detecting an impact, and the control portion is preferably configured to perform control of detecting the breakage of the screen on the basis of the detection result of the laser beam reflected by the screen obtained by the light detecting portion when the impact detecting portion detects the impact. According to this structure, the broken condition (the presence or absence of breakage) of the screen can be detected using the detection of the impact by the impact detecting portion as a trigger, and hence the broken condition of the screen can be promptly detected in synchronization with the timing at which impact force likely to cause the breakage of the screen is applied.

In this case, the control portion is preferably configured to perform control of emitting the laser beam at an output corresponding to a maximum luminance and detecting the breakage of the screen on the basis of the detection result of the laser beam reflected by the screen obtained by the light detecting portion when the impact detecting portion detects the impact. According to this structure, the actual reflection amount (actual reflected light amount) of the laser beam from the screen at the maximum luminance at which the projected image is displayed most brightly can be detected, and hence the slightly broken or lost portion of the screen caused by the impact force can be reliably detected.

In the aforementioned structure having the control portion performing control of reducing the luminance of the laser beam emitted to the broken portion of the screen or control of stopping the emission of the laser beam, a user can preferably select the control of reducing the luminance of the laser beam emitted to the broken portion of the screen in the image projected on the screen or the control of stopping the emission of the laser beam to the broken portion of the screen. According to this structure, the user can select and determine one of the aforementioned two operations as the operation of the projector when there is a breakage in the screen, and hence the convenience of the projector according to the present invention can be improved when the projector is used.

In the aforementioned projector according to the aspect, the control portion is preferably configured to perform control of detecting the breakage of the screen on the basis of the detection result of the laser beam reflected by the screen obtained by the light detecting portion when the projection portion projects the image on the screen. According to this structure, the broken condition (presence or absence of breakage) of the screen can be detected on the basis of the detection result of the laser beam reflected by the screen at the same timing as a normal projection operation of projecting the image on the screen, and hence the broken condition (presence or absence of breakage) of the screen can be promptly detected while the image is projected on the screen. In other words, a dedicated inspection mode (an operation of detecting the breakage of the screen) for detecting the broken condition of the screen different from a normal mode may not be performed in a state where the normal projection operation is temporarily stopped (interrupted), so that the convenience of the projector according to the present invention can be improved when the projector is used.

In the aforementioned projector according to the aspect, the image is preferably constituted by a plurality of pixels each having a prescribed luminance value, and the control portion is preferably configured to perform control of detecting the breakage of the screen on the basis of the detection result of the laser beam reflected by the screen obtained by the light detecting portion for each of the plurality of pixels. According to this structure, the presence or absence of breakage in the screen can be minutely detected per pixel constituting the image projected on the screen while the laser beam is scanned. Thus, the very small breakage of the screen generated per pixel can be also detected, and hence the broken condition of the screen can be detected with high detection accuracy.

In the aforementioned projector according to the aspect, the screen preferably includes a transmissive screen through which the laser beam emitted from a first side of the screen by the projection portion can penetrate to a second side of the screen, and the control portion is preferably configured to perform control of accepting the apparatus operation on the basis of a detection result, obtained by the light detecting portion, of the laser beam emitted from the first side, penetrating through the transmissive screen, and thereafter being reflected to the first side by the detection object arranged on the second side, penetrating through the transmissive screen and control of detecting the breakage of the screen on the basis of the detection result, obtained by the light detecting portion, of the laser beam emitted from the first side, reflected to the first side by the transmissive screen. Thus, in the rear-projection projector (rear projector) configured such that the image projected on the transmissive screen from the rear side (first side) of the transmissive screen can be viewed from the front side (second side) of the transmissive screen and the apparatus operation can be performed, the broken condition of the transmissive screen can be easily detected while the increase in the number of components of the apparatus body is effectively suppressed.

In the aforementioned projector according to the aspect, the control portion is preferably configured to perform control of projecting the image on the screen while avoiding a portion unsuitable for projection of the image when at least one of a broken portion and a contaminated portion included in the portion unsuitable for projection is detected on the screen on the basis of the detection result of the laser beam reflected by the screen obtained by the light detecting portion. According to this structure, the image can be projected on a portion (a normal portion suitable for projection without the broken portion or the contaminated portion) other than the portion unsuitable for projection while the portion unsuitable for projection is avoided when the portion unsuitable for the projection of the image such as the broken portion or the contaminated portion is detected on the screen, unlike the case where the image is projected on the entire screen including the broken portion and the contaminated portion without avoiding the broken portion and the contaminated portion. In other words, the image can be projected on the normal portion of the screen in a state where the completeness of information contained in the original entire image is maintained without missing the information contained in the image due to the projection on the broken portion and the contaminated portion. When there is trouble such as a breakage or contamination on the screen, for example, the urgent information displayed when a disaster strikes in addition to the normal electronic advertisement, an operation screen displayed when a virtual user interface (VUI operation) function is added to the projector, etc. can continue to be projected on the normal portion suitable for projection in the state where the completeness of the display contents is maintained while the troubled portion is avoided. Thus, the projection of the image on the screen can be continued without losing the completeness of the display contents even when there is trouble such as a breakage or contamination on the screen, and hence the projector according to the present invention can be beneficially used.

In the aforementioned structure having the control portion performing control of projecting the image on the screen while avoiding the portion unsuitable for projection when detecting at least one of the broken portion and the contaminated portion of the screen, the projector is preferably configured to previously grasp the positional information of the portion unsuitable for projection on the screen by scanning the laser beam by the projection portion and sequentially detecting the laser beam reflected by the screen through the light detecting portion, and the control portion is preferably configured to perform control of projecting the image on the screen while avoiding the portion unsuitable for projection on the basis of the positional information of the portion unsuitable for projection on the screen when the portion unsuitable for projection is detected on the screen. According to this structure, on the basis of the previously grasped positional information (the positional information of the broken portion and the contaminated portion) regarding the trouble of the screen, the image can be easily projected on the screen while the portion unsuitable for projection is avoided in the state where the completeness of the information contained in the original entire image is maintained.

In the aforementioned structure having the control portion performing control of projecting the image on the screen while avoiding the portion unsuitable for projection when detecting at least one of the broken portion and the contaminated portion of the screen, the projector is preferably configured to be capable of accepting the apparatus operation on the basis of the detection result of the laser beam reflected by the detection object obtained by the light detecting portion, the image preferably contains an operation screen configured to be capable of accepting the apparatus operation performed by a user on the basis of the detection result of the laser beam reflected by the detection object obtained by the light detecting portion, and the control portion is preferably configured to perform control of projecting the operation screen on the screen while avoiding the portion unsuitable for projection when the portion unsuitable for projection is detected on the screen. According to this structure, the projection of the operation screen on the screen can be continued in the state where the completeness of the display contents such as operation button images, a message, etc. contained in the operation screen projected on the screen is maintained when the virtual user interface (VUI operation) function is added to the projector. Therefore, a situation in which the operation screen is not properly displayed and the VUI operation is interrupted due to the trouble of the screen such as a breakage and contamination and a situation in which an erroneous operation is performed due to the false recognition of the operation screen by the user can be avoided, and hence the advantageous effect of the present invention that the projection of the image on the screen can be continued without losing the completeness of the display contents contained in the operation screen can be exerted also in the projector having the VUI function.

In the aforementioned structure having the control portion performing control of projecting the image on the screen while avoiding the portion unsuitable for projection when detecting at least one of the broken portion and the contaminated portion of the screen, the projector is preferably configured to notify a user that the portion unsuitable for projection is detected when the portion unsuitable for projection is detected on the screen, and the user can preferably select whether or not to perform control of projecting the image on the screen while avoiding the portion unsuitable for projection when the portion unsuitable for projection is detected on the screen. According to this structure, the user viewing the image (picture) can be reliably notified of the detection result of the presence or absence of trouble (a breakage, contamination, etc.) on the screen obtained by the light detecting portion. Furthermore, the user can determine whether or not to shift an operation mode to an operation mode in which the image is projected on the screen while the troubled portion unsuitable for projection is avoided on the basis of the operation of notifying that the trouble such as a breakage and contamination is detected. Therefore, the user can view the projected image (picture) and operate the operation screen while becoming aware of the trouble of the screen.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view schematically showing the structure of a rear projector according to a first embodiment of the present invention;
Fig. 2 is a block diagram showing the structure of the rear projector according to the first embodiment of the present invention;
Fig. 3 is a diagram showing light receiving levels of a laser beam (reflected light) reflected according to the condition of a screen, detected by a light receiving portion in the rear projector according to the first embodiment of the present invention;
Fig. 4 is a diagram showing a setting screen displayed by the rear projector according to the first embodiment of the present invention;
Fig. 5 is a diagram showing another setting screen displayed by the rear projector according to the first embodiment of the present invention;
Fig. 6 is a diagram showing a processing flow of a control portion for acquiring the reference reflection amount from the screen without a breakage in the rear projector according to the first embodiment of the present invention;
Fig. 7 is a diagram showing a processing flow of the control portion for acquiring the reference reflection amount from the screen without a breakage in the rear projector according to the first embodiment of the present invention;
Fig. 8 is a diagram schematically showing a table in which the reference reflection amount acquired through the processing flow shown in Fig. 7 is stored;
Fig. 9 is a diagram showing a processing flow of the control portion for detecting the breakage of the screen during the projection of an image in the rear projector according to the first embodiment of the present invention;
Fig. 10 is a block diagram showing the structure of a rear projector according to a second embodiment of the present invention;
Fig. 11 is a diagram showing a processing flow of a control portion for acquiring the reference reflection amount from a screen without a breakage in the rear projector according to the second embodiment of the present invention;
Fig. 12 is a diagram showing a processing flow of the control portion for detecting the breakage of the screen when an impact is applied to an apparatus body in the rear projector according to the second embodiment of the present invention;
Fig. 13 is a perspective view schematically showing the structure of a rear projector according to a third embodiment of the present invention;
Fig. 14 is a diagram showing an image (VUI screen) projected when there is no broken portion or contaminated portion on a screen in the rear projector according to the third embodiment of the present invention;
Fig. 15 is a diagram showing a notification screen displayed by the rear projector according to the third embodiment of the present invention;
Fig. 16 is a diagram showing an image (VUI screen) projected when a broken portion and a contaminated portion are detected on the screen in the rear projector according to the third embodiment of the present invention;
Fig. 17 is a diagram showing a state map regarding the display of the screen stored in the rear projector according to the third embodiment of the present invention;
Fig. 18 is a diagram showing a setting screen displayed by the rear projector according to the third embodiment of the present invention;
Fig. 19 is a diagram showing a processing flow of a control portion for detecting the condition of the screen in the rear projector according to the third embodiment of the present invention;
Fig. 20 is a diagram showing a processing flow of the control portion for projecting an image in the rear projector according to the third embodiment of the present invention; and
Fig. 21 is a block diagram showing the structure of a rear projector according to a fourth embodiment of the present invention.

### DESCRIPTION OF THE PREFERRED EMBODIMENTS

Embodiments of the present invention are hereinafter described with reference to the drawings.

### (First Embodiment)

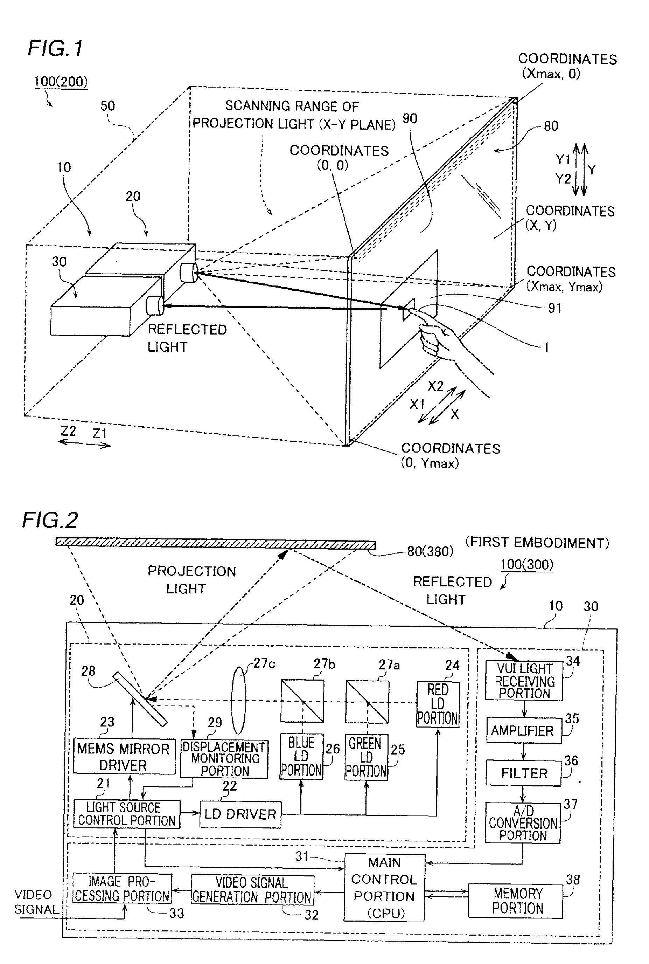

The structure of a rear projector 100 according to a first embodiment of the present invention is now described with reference to Figs. 1 to 9. The rear projector 100 is an example of the "projector" in the present invention.

The rear projector 100 according to the first embodiment of the present invention includes an apparatus body 10 into which a projection portion 20 including a light source portion employing a semiconductor laser element is built and a transmissive screen 80 on which a laser beam scanned by the projection portion 20 of the apparatus body 10 is projected as an image (picture), as shown in Fig. 1. The apparatus body 10 is housed in a housing 50 (the outer shape is shown by a two-dot chain line), and the transmissive screen 80 is set on the front side (Z1 side) of the housing 50.

According to the first embodiment, the rear projector 100 has a virtual user interface (VUI) function. In other words, a user can operate the apparatus body 10 or perform an operation on an application program (not shown) projected on the screen 80 according to a prescribed input operation by performing the input operation on a VUI screen 91 contained in a prescribed image 90 projected on the screen 80 with his/her finger 1, as shown in Fig. 1. This VUI operation on the apparatus body 10 can be performed with a touch pen (not shown) or the like instead of the aforementioned finger 1 of the user. The finger 1 or touch pen is an example of the "detection object" in the present invention.

The structure of the apparatus body 10 is now described in more detail. The apparatus body 10 is mainly constituted by the projection portion 20 configured to two-dimensionally emit a laser beam to the screen 80 (X-Y plane) on the front side (Z1 side) and a VUI portion 30 configured to detect a laser beam (reflected light) reflected rearward (toward the projection portion 20) by the finger 1 of the user or the like placed at a prescribed position in the VUI screen 91 contained in the image 90 projected on the screen 80 (X-Y plane). The VUI portion 30 internally detects the intensity (light receiving level) of the laser beam reflected by the finger 1, the touch pen (not shown), or the like, whereby a main control portion 31 described later recognizes the operation content input into the apparatus body 10.

As shown in Fig. 2, the projection portion 20 includes a light source control portion 21, an LD (laser diode) driver 22, and a MEMS mirror driver 23. The projection portion 20 further includes a red LD (laser diode) portion 24, a green LD (laser diode) portion 25, and a blue LD (laser diode) portion 26 serving as the light source portion, two polarizing beam splitters 27a and 27b and one lens 27c constituting an optical system, a MEMS (micro electro mechanical system) mirror 28 serving as a drive portion for operating a laser beam, and a displacement monitoring portion 29 detecting the displacement (posture) of the MEMS mirror 28. The red LD portion 24, the green LD portion 25, and the blue LD portion 26 are examples of the "laser beam generation portion" in the present invention.

The VUI portion 30 includes the main control portion 31 including a CPU, a video signal generation portion 32, an image processing portion 33, a VUI light receiving portion 34, an amplifier 35, a filter 36, an A/D conversion portion 37, and a memory portion 38. The main control portion 31 is an example of the "control portion" in the present invention. The VUI light receiving portion 34 is an example of the "light detecting portion" in the present invention. The memory portion 38 is an example of the "storage portion" in the present invention.

The light source control portion 21 of the projection portion 20 has a function of individually controlling the outputs of laser beams emitted from the red LD portion 24, the green LD portion 25, and the blue LD portion 26 by controlling the LD driver 22 on the basis of an image signal (pixel information) externally input into the image processing portion 33. The MEMS mirror driver 23 has a function of dynamically controlling the posture (inclination angle) of the MEMS mirror 28 on the basis of an output signal from the light source control portion 21. The laser beam emitted from the red LD portion 24 and the laser beam emitted from the green LD portion 25 pass through the polarizing beam splitters 27a and 27b and the lens 27c in this order and are incident on the MEMS mirror 28. The laser beam emitted from the blue LD portion 26 passes through the polarizing beam splitter 27b and the lens 27c in this order and is incident on the MEMS mirror 28.

The MEMS mirror 28 has a function of scanning the red (R-color), green (G-color), and blue (B-color) laser beams passing through the lens 27c and being incident on (emitted to) the MEMS mirror 28 in a state where these laser beams are condensed into one about two axes in a horizontal direction (transverse direction (direction X)) and a vertical direction (longitudinal direction (direction Y)) on the screen 80 (see Fig. 1) by dynamically changing the posture (inclination angle) about the two axes in a first direction (horizontal direction) and a second direction (vertical direction) orthogonal to the first direction at the prescribed timing. The displacement monitoring portion 29 is constituted by a microphone and an A/D conversion portion and has a function of detecting the displacement (posture) of the MEMS mirror 28 in real time.

The main control portion 31 provided in the VUI portion 30 has a function of totally controlling not only the control operation of the VUI portion 30 but also the operation of the projection portion 20. The image processing portion 33 has a function of analyzing an externally input picture and recognizing pixel information. The image processing portion 33 also has a function of superimposing the externally input picture on a signal waveform generated by the video signal generation portion 32 and outputting the same to the light source control portion 21. The VUI light receiving portion 34 has a function of receiving the reflected light (laser beam) reflected by the finger 1 or the like on the screen 80. The amplifier 35 has a function of amplifying a detection signal of the VUI light receiving portion 34. The A/D conversion portion 37 has a function of converting an analog signal amplified by the amplifier 35, whose noise is removed by the filter 36 into a digital signal and outputting the digital signal to the main control portion 31.

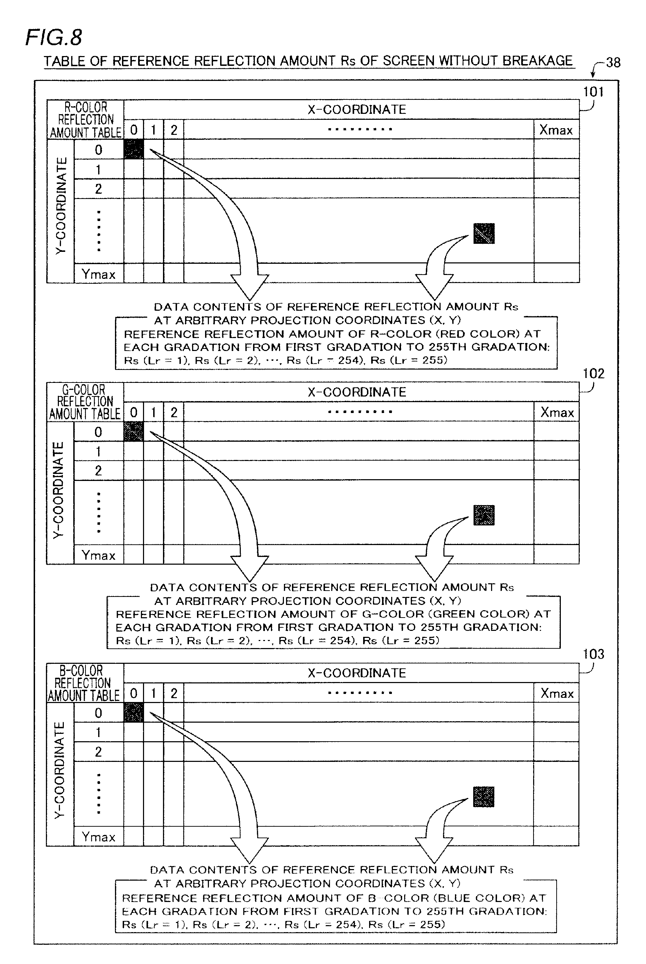

In addition to a control program executed by the main control portion 31, an R-color reflection amount table 101 (see Fig. 8), a G-color reflection amount table 102 (see Fig. 8), and a B-color reflection amount table 103 (see Fig. 8) described later, etc. are stored in a prescribed region of the memory portion 38. The memory portion 38 is also employed as a working memory temporarily storing control parameters employed when the control program is executed.

The rear projector 100 has a function of two-dimensionally scanning the laser beam on the screen 80 for each pixel while reproducing colors that pixels constituting the single image 90 (see Fig. 1) have in about 16.78 million colors and projecting the image 90 of one frame by varying the outputs (luminance values) of the laser beams emitted from the red LD portion 24, the green LD portion 25, and the blue LD portion 26 and the posture of the MEMS mirror 28 for each pair of projection coordinates on the screen 80 on the basis of the control of the LD driver 22 and the MEMS mirror driver 23 performed by the light source control portion 21. In other words, in each of the red LD portion 24, the green LD portion 25, and the blue LD portion 26, luminances of 256 gradations from a 0th gradation (minimum luminance) to a 255th gradation (maximum luminance) is reproducible with respect to each of three RGB primary colors, and hence about 16.78 million colors corresponding to the cube of the 256 gradations are reproducible for each pixel. The image 90 projected by the projection portion 20 contains the VUI screen 91 (see Fig. 1) enabling the acceptance of the aforementioned VUI operation. The MEMS mirror 28 is configured to scan the laser beam horizontally (in a direction X) at high speed by resonant drive and scan the laser beam vertically (in a direction Y) at low speed by DC drive.

When the rear projector 100 projects the image 90 on the screen 80, the VUI light receiving portion 34 (see Fig. 2) of the VUI portion 30 outputs a signal of the following light receiving level.

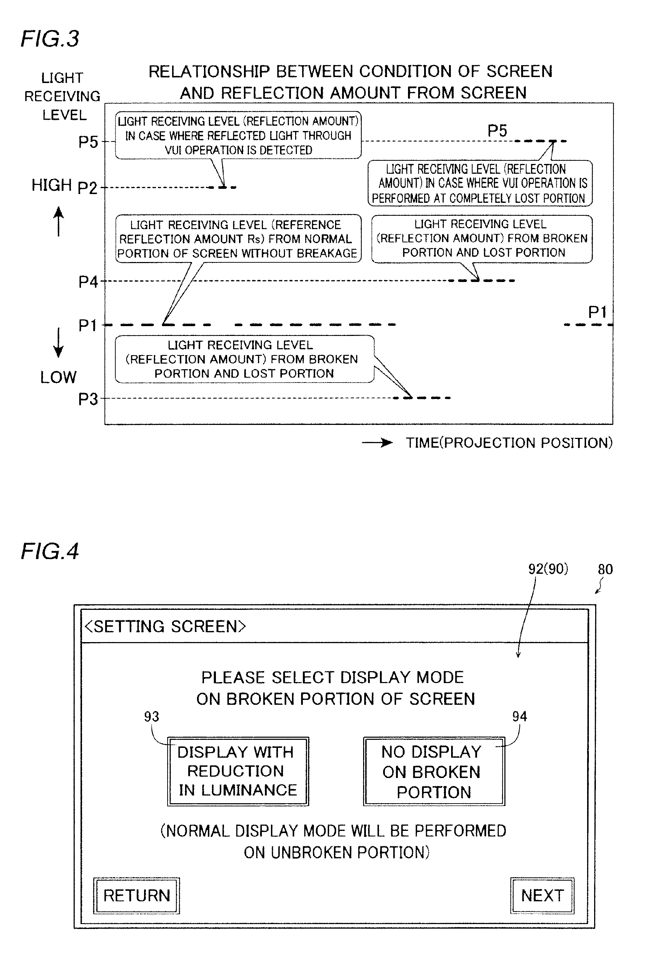

Specifically, a laser beam (reflected light) reflected by the screen 80 has a certain reflection amount (normal reflection amount) when there is no breakage such as a crack or scratch, a complete loss of a part of a projection surface resulting from a breakage, or the like in a prescribed portion (projection surface) of the screen 80 (see Fig. 1), as shown in Fig. 3. In this case, the VUI light receiving portion 34 detects this normal reflected light at the magnitude of a light receiving level P1. When the user holds his/her finger 1, the touch pen (not shown), or the like over the VUI screen 91 (see Fig. 1) for the VUI operation, a laser beam penetrating through the screen 80 along arrow Z1 (see Fig. 1) is reflected by the finger 1 or the touch pen along arrow Z2, penetrates through the screen 80 again along arrow Z2, and is incident on the VUI light receiving portion 34. In this case, the VUI light receiving portion 34 detects the reflected light during the VUI operation at the magnitude of a light receiving level P2 larger than the light receiving level P1.

When there is the aforementioned breakage, loss, or the like in the prescribed portion (projection surface) of the screen 80, on the other hand, the VUI light receiving portion 34 detects the laser beam (reflected light) reflected by the screen 80 at the magnitude of light receiving levels P3, P4, and P5 different from the light receiving level P1 in a portion or region where there is this breakage, loss, or the like. The reflected light (light receiving level P3) from a lost portion or seriously broken portion of the screen 80 may be much smaller than the normal light receiving level P1, and the refection amount may be equal to zero. In contrast, the reflected light (light receiving level P4) from a slightly cracked portion of the screen 80 may be larger than the normal light receiving level P1. When the finger 1 or the like is placed on the completely lost portion of the screen 80, the VUI light receiving portion 34 may detect the reflected light (light receiving level P5) larger than the reflected light by the VUI operation.

Therefore, according to the first embodiment, the rear projector 100 focuses attention on the magnitude (actual reflection amount) of the reflected light varying with the physical condition (the presence or absence of breakage) of the screen 80, whereby the broken condition (the presence or absence of breakage) of the screen 80 can be detected on the basis of the detection result of the laser beam reflected by the screen 80 obtained by the VUI light receiving portion 34. In other words, the rear projector 100 has a VUI operation function allowing the user to perform a prescribed input operation on the VUI screen 91 with his/her finger 1, the touch pen (not shown), or the like and is configured to detect the breakage of the screen 80 on the basis of the detection result of the laser beam reflected by the screen 80, effectively utilizing the VUI light receiving portion 34. In this case, the rear projector 100 determines that there is no breakage in a portion of the screen 80 where the light receiving level P1 (see Fig. 3) is detected by the VUI light receiving portion 34 and determines that there is some sort of breakage in a portion of the screen 80 where the light receiving level P3, P4, or P5 (see Fig. 3) is detected by the VUI light receiving portion 34. The main control portion 31 (see Fig. 2) is configured to determine the presence or absence of breakage in the screen 80 on the basis of the detection result of the laser beam reflected by the screen 80 obtained by the VUI light receiving portion 34.

According to the first embodiment, the laser beam is emitted to the screen 80 without a breakage in shipping from the factory or the like, and the laser beam reflected by the screen 80 is detected by the VUI light receiving portion 34, whereby the reference reflection amount Rs (= light receiving level P1) of the screen 80 without a breakage is previously acquired and stored in the memory portion 38 (see Fig. 2). The broken condition of the screen 80 is determined on the basis of a comparison result of the actual reflection amount Ra (= light receiving level P1, P2, P3, P4, or P5 (see Fig. 3)) of the laser beam reflected by the screen 80, detected by the VUI light receiving portion 34 in a state where the projection portion 20 projects the prescribed image 90 on the screen 80 and the reference reflection amount Rs (= light receiving level P1). The detected broken condition of the screen 80 (data showing where in the screen 80 a breakage is generated) is stored in the memory portion 38 after the broken condition is determined. These points are described in detail in a control flow of the rear projector 100, described later.

According to the first embodiment, when it is determined on the basis of the detection result of the laser beam reflected by the screen 80 obtained by the VUI light receiving portion 34 that there is a breakage in the screen 80, in the image 90 projected on the screen 80, the luminance of the laser beam emitted to the broken portion of the screen 80 is reduced (a "luminance reduction display mode" is executed) or the emission of the laser beam to the broken portion of the screen 80 is stopped (a "partial display mode" is executed), but the projection of the image 90 on a (unbroken) portion of the screen 80 other than the broken portion is continued without reducing the luminance of the laser beam.

According to the first embodiment, the user can previously select a display mode in which the luminance of the laser beam emitted to the broken portion of the screen 80 in the image 90 projected on the screen 80 is reduced, that is the "luminance reduction display mode" or a display mode in which the emission of the laser beam to the broken portion of the screen 80 is stopped, that is the "partial display mode", through a VUI screen 92 contained in a setting screen, as shown in Fig. 4. Specifically, when a selection button 93, "reduce the luminance for display", in the VUI screen 92 displayed on the screen 80 is selected, the display mode is set to the "luminance reduction display mode" in which the luminance of the laser beam emitted to the broken portion of the screen 80 in the image 90 projected on the screen 80 is reduced. When a selection button 94, "not display the image on the broken portion", in the VUI screen 92, is selected, the display mode is set to the "partial display mode" in which the laser beam is not emitted to the broken portion of the screen 80 in the image 90 projected on the screen 80. Therefore, the user can previously set the display mode to either the "luminance reduction display mode" or the "partial display mode" through the VUI screen 92 as a response of the apparatus at the time of detection of the breakage before the projection of the image 90. In a default state in shipping of a product or the like, the "luminance reduction display mode" is set.

According to the first embodiment, an operation of detecting the breakage of the screen 80 is performed for each of a plurality of pixels constituting the image 90 by the VUI light receiving portion 34. When the image 90 is displayed at a resolution of 1024 × 768 pixels, for example, the broken portion of the screen 80 is detected by comparing the actual reflection amount Ra with the reference reflection amount Rs with respect to each of 786,432 pixels. Thus, the presence or absence of breakage in the screen 80 can be minutely detected per pixel constituting the image 90 projected on the screen 80 while the laser beam is scanned.

According to the first embodiment, when the projection portion 20 projects the image 90 on the screen 80, the breakage of the screen 80 is detected on the basis of the detection result of the laser beam reflected by the screen 80 obtained by the VUI light receiving portion 34. Thus, the presence or absence of breakage in the screen 80 can be detected on the basis of the detection result of the laser beam reflected by the screen 80 at the same timing as a normal projection operation of projecting the image 90 on the screen 80. Therefore, the presence or absence of breakage in the screen 80 can be promptly detected while the image 90 is projected on the screen 80.

When the aforementioned breakage of the screen 80 is detected in the rear projector 100, the user, a service department of a maker, or the like repairs the broken portion of the screen 80. Depending on the degree of breakage, the maker may replace the screen 80 by a new screen 80, or the user may implement emergency treatment by applying a tape used for repairs onto the broken portion or filling the broken portion with a repairing agent if the breakage is minimal, for example. For these cases, the user can previously set a projection operation for reusing the rear projector 100 after repair.

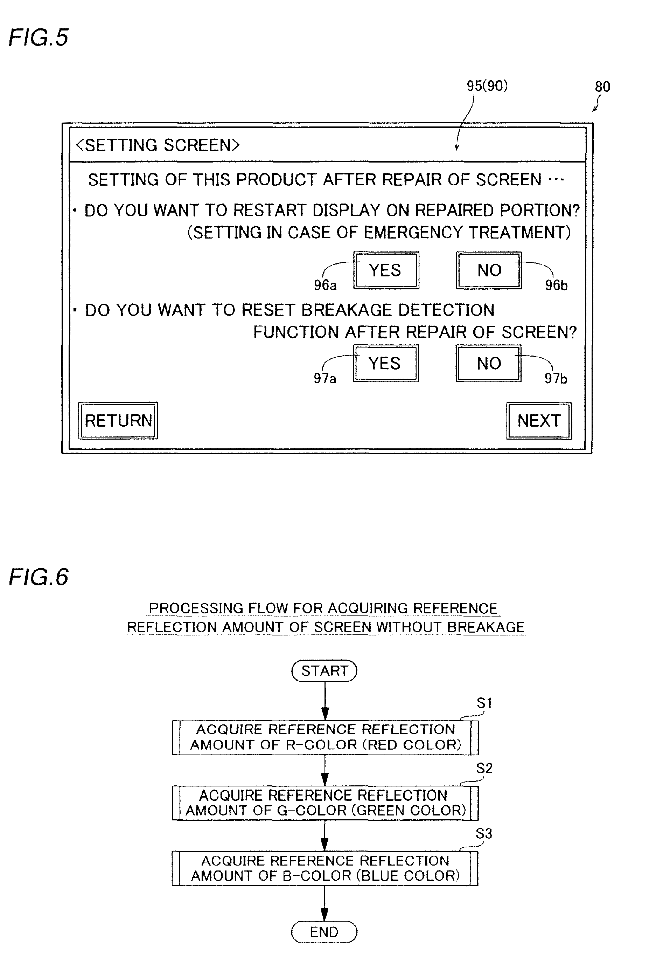

More specifically, a VUI screen 95 shown in Fig. 5 is prepared in the rear projector 100. In other words, similarly to the VUI screen 92 shown in Fig. 4, selection buttons 96a and 96b configured to select the display mode of the image 90 after repair according to the degree of repair of the screen 80 are provided as a first setting item in the VUI screen 95 contained in the setting screen. Furthermore, selection buttons 97a and 97b configured to select whether or not database on the operation of detecting the breakage of the screen 80 after repair is initialized (an operation of reacquiring the reference reflection amount Rs of the repaired screen 80 and re-registering the data in the memory portion 38 is performed) are provided as a second setting item.

In the case where the selection button 96a of the first setting item is selected, the image 90 is normally projected on an entire projection area after repair. This selection content may be selected when the screen 80 is completely repaired (replaced). In the case where the selection button 96b is selected, the image 90 is not normally projected on a repaired portion (pixel region) of the screen 80 even after repair. In other words, the "luminance reduction display mode" or the "partial display mode" set through the VUI screen 92 shown in Fig. 4 is continued even after repair. This selection content can be selected when the screen 80 on which the emergency treatment is implemented is used. As to the first setting item, the "luminance reduction display mode" corresponding to the selection button 96b is set in the default state in shipping of a product or the like.

In the case where the selection button 97a of the second setting item is selected, the reference reflection amount Rs of the screen 80 without a breakage is reacquired and is overwritten and updated (re-registered) in the memory portion 38 when the apparatus body 10 is powered after repair. This selection content may be selected when the user wishes to reset the operation of detecting the breakage by reacquiring the reference reflection amount Rs used to determine breakage detection in any of these cases where the screen 80 is completely repaired (replaced) and only the emergency treatment is implemented on the screen 80. In the case where the selection button 97b is selected, the operation of detecting the breakage is performed also on the repaired screen 80, using the reference reflection amount Rs originally acquired before repair (at the time of purchase of a new screen 80). This selection content corresponds to the case where the user determines that it is not necessary to reacquire the reference reflection amount Rs after repair, such as the case where minor repair such as the emergency treatment is performed on the screen 80. As to the second setting item, an "operation mode of repairing and reacquiring the reference reflection amount Rs" corresponding to the selection button 97a is set in the default state in shipping of a product or the like.

A processing flow of the main control portion 31 for performing an operation of constantly detecting the broken condition of the screen 80 in parallel with the operation of projecting the image 90 (picture) on the screen 80 in the rear projector 100 according to the first embodiment is now described with reference to Figs. 1 to 4 and 6 to 9.

According to the first embodiment, first, the laser beam is emitted to the screen 80 (see Fig. 1) without a breakage, a defect, or the like, and the reflected light (light receiving level P1 (see Fig. 3)) reflected by the screen 80 is automatically measured by the VUI light receiving portion 34 (see Fig. 2) when the apparatus body 10 (see Fig. 1) is powered at the time of factory shipment inspection performed immediately after the rear projector 100 (see Fig. 1) is assembled. The data of the measured reflection amount serves as the reference reflection amount Rs (the R-color reflection amount table 101, the G-color reflection amount table 102, and the B-color reflection amount table 103 described later) referred to when the user uses the rear projector 100 and determines whether or not there is a breakage in the screen 80 and is stored in the memory portion 38 (see Fig. 2).

In other words, on the basis of a command of the main control portion 31, the reflection amount of the reflected light from the screen 80 regarding an R-color (red color) is measured, and the reflection amount data (reference reflection amount Rs) in an unbroken condition is acquired at a step S1, as shown in Fig. 6. Thus, the acquisition of the reference data regarding the R-color (red color) reflection amount (the initialization of the database) is completed. Then, on the basis of a command of the main control portion 31, the reflection amount of the reflected light from the screen 80 regarding a G-color (green color) is measured, and the reflection amount data (reference reflection amount Rs) in the unbroken condition is acquired at a step S2. Thus, the acquisition of the reference data regarding the G-color (green color) reflection amount (the initialization of the database) is completed. Finally, on the basis of a command of the main control portion 31, the reflection amount of the reflected light from the screen 80 regarding a B-color (blue color) is measured, and the reflection amount data (reference reflection amount Rs) in the unbroken condition is acquired at a step S3. Thus, the acquisition of the reference data regarding the B-color (blue color) reflection amount (the initialization of the database) is completed. Thus, this control flow is terminated.

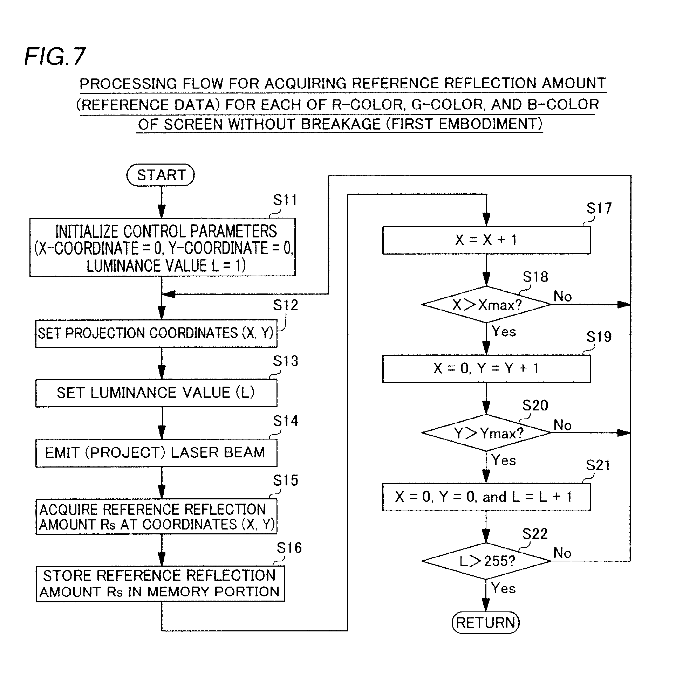

The specific operation of the rear projector 100 for acquiring the reflection amount data (reference reflection amount Rs) at each of the aforementioned steps S1, S2, and S3 is now described with reference to Fig. 7. An operation of acquiring the data of the reference reflection amount Rs regarding the R-color (red color) executed at the step S1 is described here. At the steps S2 and S3, the driven LD portion (light source portion) is sequentially shifted from the red LD portion 24 (see Fig. 2) to the green LD portion 25 (see Fig. 2) and from the green LD portion 25 to the blue LD portion 26 (see Fig. 2), and the same operation is performed. Thus, the description is omitted.

As shown in Fig. 7, first, the control parameters are initialized at a step S11. In other words, the main control portion 31 (see Fig. 2) initializes the projection coordinates (X, Y) on the screen 80 (see Fig. 1) as the control parameters to the coordinates (X, Y) = (0, 0) and initializes the luminance value (R-color gradation value) of the laser beam from the red LD portion 24 (see Fig. 2) to a first gradation (luminance value Lr = 1) that is a minimum luminance. As described above, the green LD portion 25 (see Fig. 2) and the blue LD portion 26 (see Fig. 2) are not driven on the basis of the command of the main control portion 31 at the step S1.

At a step S12, the projection coordinates (X, Y) of the laser beam from the red LD portion 24 are set. In this case, the projection coordinates (X, Y) are set such that the laser beam is projected toward a position corresponding to the coordinates (0, 0) of the screen 80. The coordinates (0, 0) are coordinates corresponding to corners on an X1 side and a Y1 side of a projectable region of the screen 80, for example. At a step S13, the output (luminance value: R-color gradation value) of the laser beam is set. In this case, the output is set such that the laser beam having the first gradation (luminance value Lr = 1) is emitted from the red LD portion 24.

Thereafter, the main control portion 31 drives the MEMS mirror 28 to project the laser beam having the first gradation from the red LD portion 24 toward the position corresponding to the coordinates (0, 0) of the screen 80 at a step S14. Then, the reflected light reflected by the screen 80 is measured with the VUI light receiving portion 34 (see Fig. 2), whereby the reference reflection amount Rs is acquired at a step S15. Then, the reference reflection amount Rs of the first gradation at the coordinates (0, 0) is stored in the memory portion 38 (see Fig. 2) at a step S16.

Thereafter, the X-coordinate is incremented by one at a step S17. In this case, instead of 0, 1 is assigned to the variable X. At a step S18, it is determined whether or not the current X-coordinate exceeds Xₘₐₓ as a maximum value. The coordinate value Xₘₐₓ is an X-coordinate corresponding to an end on an X2 side of the projectable region of the screen 80. When it is determined that the current X-coordinate does not exceed the coordinate Xₘₐₓ at the step S18, the processing returns to the step S12. At the step S12, the projection coordinates (X, Y) are set such that the laser beam from the red LD portion 24 is projected toward the coordinates (1, 0) of the screen 80. At the step S13, the output is set such that the laser beam having the first gradation (luminance value Lr = 1) is emitted from the red LD portion 24, and the steps S14 to S16 are executed, whereby the reference reflection amount Rs of the first gradation at the coordinates (1, 0) is stored in the memory portion 38. The processing operations at the steps S12 to S18 are repeated until the current X-coordinate exceeds the coordinate Xₘₐₓ. Thus, the reference reflection amount Rs of the first gradation at each pair of projection coordinates in the case where the X-coordinate is moved in the transverse direction from 0 to Xₘₐₓ by one pixel at a time in a state where the Y-coordinate is fixed to 0 is sequentially stored in the memory portion 38.

When it is determined that the current X-coordinate exceeds the coordinate Xₘₐₓ at the step S18, the processing advances to a step S19, the X-coordinate is brought back to 0, and the Y-coordinate is incremented by one. Then, it is determined whether or not the current Y-coordinate exceeds Yₘₐₓ as a maximum value at a step S20. The coordinate value Yₘₐₓ is a Y-coordinate corresponding to an end on a Y2 side of the projectable region of the screen 80. When it is determined that the current Y-coordinate does not exceed the coordinate Yₘₐₓ at the step S20, the processing returns to the step S12. At the step S12, the projection coordinates (X, Y) are set such that the laser beam from the red LD portion 24 is projected toward the coordinates (0, 1) of the screen 80. At the step S13, the output is set again such that the laser beam having the first gradation (luminance value Lr = 1) is emitted from the red LD portion 24, and the steps S14 to S16 are executed, whereby the reference reflection amount Rs of the first gradation at the coordinates (0, 1) is stored in the memory portion 38. The processing operations at the steps S12 to S18 are repeated until the current X-coordinate exceeds the coordinate Xₘₐₓ. Thus, the reference reflection amount Rs of the first gradation at each pair of projection coordinates in the case where the X-coordinate is moved in the transverse direction from 0 to Xₘₐₓ by one pixel at a time in a state where the Y-coordinate is fixed to 1 is sequentially stored in the memory portion 38. The processing operations at the steps S12 to S20 are repeated until the current Y-coordinate exceeds the coordinate Yₘₐₓ. In other words, the reference reflection amount Rs of the first gradation at each pair of projection coordinates in the case where the Y-coordinate is moved in the longitudinal direction from 0 to Yₘₐₓ by one pixel at a time in addition to the X-coordinate is sequentially stored in the memory portion 38. At this point, the reference reflection amount Rs for each pixel from the screen 80 in the case where the red laser beam is projected on the entire projection area (a position corresponding to each pixel from the coordinates (0, 0) to the coordinates (Xₘₐₓ, Yₘₐₓ)) of the screen 80 at the first gradation (luminance value Lr = 1) is stored in the memory portion 38. In other words, the number of data corresponding to (Xₘₐₓ + 1) × (Yₘₐₓ + 1) pixels at the first gradation is accumulated in the memory portion 38.

When it is determined that the current Y-coordinate exceeds the coordinate Yₘₐₓ at the step S20, the processing advances to a step S21, both the X-coordinate and the Y-coordinate are brought back to 0, and the setting luminance value (luminance value Lr) of the laser beam is incremented by one. In this case, instead of 1 (first gradation), 2 is assigned to the variable Lr.

At a step S22, it is determined whether or not the current gradation value exceeds the 255th gradation that is a maximum luminance. When it is determined that the current gradation value does not exceed the 255th gradation at the step S22, the processing returns to the step S12. Subsequently, the steps S12 to S20 are repeated, whereby the reference reflection amount Rs for each pixel from the screen 80 in the case where the red laser beam is projected on the entire projection area (the position corresponding to each pixel from the coordinates (0, 0) to the coordinates (Xₘₐₓ, Yₘₐₓ)) of the screen 80 at a second gradation (luminance value Lr = 2) is stored in the memory portion 38. In other words, the number of data corresponding to the (Xₘₐₓ + 1) × (Yₘₐₓ + 1) pixels at the second gradation is accumulated in the memory portion 38.

When it is determined that the current gradation value exceeds the 255th gradation at the step S22, this control flow is terminated, and the step S1 shown in Fig. 6 is completed. At this point, the reference reflection amount Rs for each pixel from the screen 80 in the case where the laser beam from the red LD portion 24 is projected on the entire projection area (the position corresponding to each pixel from the coordinates (0, 0) to the coordinates (Xₘₐₓ, Yₘₐₓ)) of the screen 80 at all gradation values from the first gradation to the 255th gradation is stored in the memory portion 38. In other words, the number of data corresponding to ((Xₘₐₓ + 1) × (Yₘₐₓ + 1) pixels × 255 red gradations is accumulated in the memory portion 38.

At the step S2 shown in Fig. 6, only the green LD portion 25 is driven on the basis of the command of the main control portion 31, and the steps S11 to S22 shown in Fig. 7 are executed similarly. At the step S3 shown in Fig. 6, only the blue LD portion 26 is driven on the basis of the command of the main control portion 31, and the steps S11 to S22 shown in Fig. 7 are executed similarly. Consequently, the reference reflection amount Rs for each pixel from the screen 80 in the case where each of the laser beam from the red LD portion 24, the laser beam from the green LD portion 25, and the laser beam from the blue LD portion 26 is projected on the entire projection area ((Xₘₐₓ + 1) × (Yₘₐₓ + 1) pixels) at the 255 gradations in total from the first gradation to the 255th gradation is stored in the memory portion 38. In other words, the number of data corresponding to (Xₘₐₓ + 1) × (Yₘₐₓ + 1) pixels × 255 gradations × three RGB primary colors is eventually accumulated in the memory portion 38.

As shown in Fig. 8, the reference reflection amounts Rs from the first gradation to the 255th gradation of each color with respect to the entire projection area (each pixel from the coordinates (0, 0) to the coordinates (Xₘₐₓ, Yₘₐₓ)) of the screen 80 are stored in the memory portion 38 in a state where the reference reflection amounts Rs are divided into the R-color reflection amount table 101, the G-color reflection amount table 102, and the B-color reflection amount table 103. In this manner, the laser beam is emitted to the screen 80 without a breakage, a defect, or the like, whereby the reference reflection amount Rs referred to when it is determined whether or not there is a breakage in the screen 80 (see Fig. 1) is previously acquired (the database is initialized).

A processing flow of the main control portion 31 for actually projecting the image 90 (picture) by the rear projector 100 is now described.

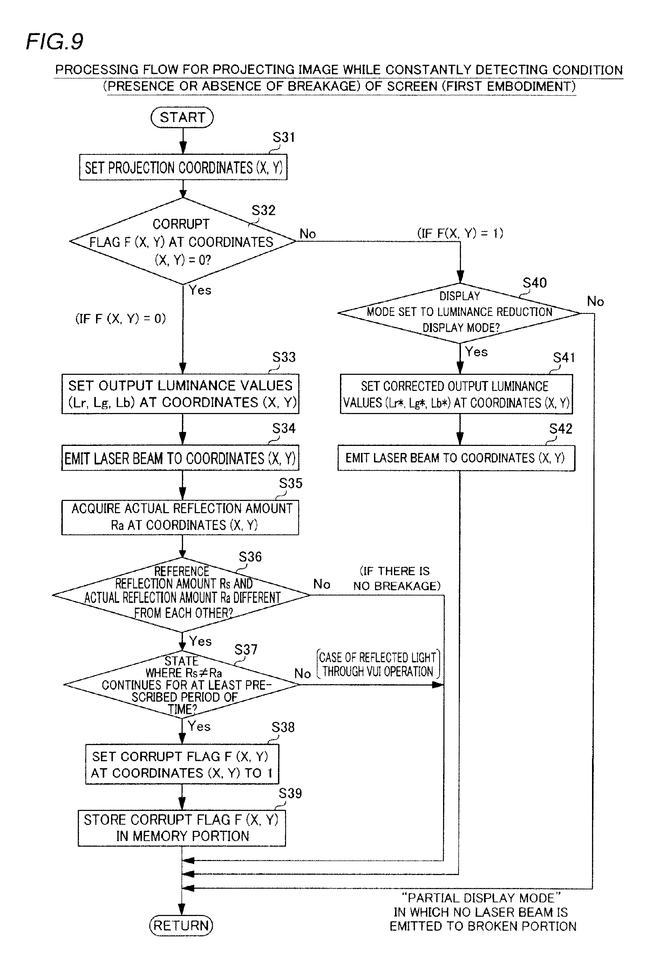

As shown in Fig. 9, first, the main control portion 31 (see Fig. 2) sets the coordinates (X, Y) of the screen 80 (see Fig. 1) on which the laser beam is projected on the basis of a prescribed image signal at a step S31.

Then, the main control portion 31 determines whether or not a corrupt flag F (X, Y) at the coordinates (X, Y) set at the step S31 is 0 at a step S32. The corrupt flag F (X, Y) denotes a control parameter set such that F (X, Y) = 0 when a portion of the screen 80 corresponding to the position of the coordinates (X, Y) is not broken or lost and set such that F (X, Y) = 1 when the portion of the screen 80 corresponding to the position of the coordinates (X, Y) is broken or lost.

When the main control portion 31 determines that the corrupt flag F (X, Y) is equal to 0 at the step S32, the output (red: luminance value Lr, green: luminance value Lg, blue: luminance value Lb) of the laser beam of each color at the coordinates (X, Y) is set at a step S33. Then, in a state where the main control portion 31 sets the red LD portion 24, the green LD portion 25, and the blue LD portion 26 (see Fig. 2) to the laser outputs corresponding to the luminance value Lr, the luminance value Lg, and the luminance value Lb, respectively, the laser beam is projected to a position corresponding to the coordinates (X, Y) of the screen 80 at a step S34. Then, the laser beam (reflected light) reflected by the screen 80 at the position corresponding to the coordinates (X, Y) is measured with the VUI light receiving portion 34 (see Fig. 2), whereby a current actual reflection amount Ra is acquired at a step S35.

Then, the main control portion 31 compares the reference reflection amount Rs and the actual reflection amount Ra in the case where the laser beam is projected on the coordinates (X, Y) at the output luminance value (luminance value Lr, luminance value Lg, luminance value Lb) with each other at a step S36. The reference reflection amount Rs is calculated as the sum of the reflection amount Rs (r) at the luminance value Lr of an R-color constituting a pixel at the coordinates (X, Y), the reflection amount Rs (g) at the luminance value Lg of a G-color constituting the pixel at the coordinates (X, Y), and the reflection amount Rs (b) at the luminance value Lb of a B-color constituting the pixel at the coordinates (X, Y) (Rs = Rs(r) + Rs (g) + Rs(b)). In the image signal (pixel information) externally input into the image processing portion 33 (see Fig. 2), it is defined that the pixel at the coordinates (X, Y) is constituted by the prescribed luminance value Lr of the R-color, the prescribed luminance value Lg of the G-color, and the prescribed luminance value Lb of the B-color. Therefore, the main control portion 31 extracts the reflection amount Rs(r) corresponding to the luminance value Lr at the coordinates (X, Y) contained in the image signal (pixel information) in the R-color reflection amount table 101 (see Fig. 8), the reflection amount Rs(g) corresponding to the luminance value Lg at the coordinates (X, Y) contained in the image signal (pixel information) in the G-color reflection amount table 102 (see Fig. 8), and the reflection amount Rs(b) corresponding to the luminance value Lb at the coordinates (X, Y) contained in the image signal (pixel information) in the B-color reflection amount table 103 (see Fig. 8) from the memory portion 38 (see Fig. 2) and calculates the reference reflection amount Rs. In a comparison between the reference reflection amount Rs and the actual reflection amount Ra, it is determined that the reference reflection amount Rs and the actual reflection amount Ra are substantially equal to each other when a difference between the reference reflection amount Rs and the actual reflection amount Ra is not more than a prescribed value, and it is determined that the actual reflection amount Ra is different from the reference reflection amount Rs (the reference reflection amount Rs ≠ the actual reflection amount Ra) when the difference is more than the prescribed value.

When it is determined that the actual refection amount Ra is different from the reference reflection amount Rs (the difference between the reference reflection amount Rs and the actual reflection amount Ra is more than the prescribed value) on the basis of the aforementioned criteria for determination in the comparison at the step S36, it is determined whether or not this state (the state where the reference reflection amount Rs ≠ the actual reflection amount Ra) continues for at least a prescribed period of time at a step S37. When it is determined that the state where Rs ≠ Ra (the state where the difference between the reference reflection amount Rs and the actual reflection amount Ra is more than the prescribed value) continues for at least the prescribed period of time at the step S37, 1 is newly set as the corrupt flag F (X, Y) at the coordinates (X, Y) at a step S38. Then, the corrupt flag F (X, Y) (= 1) with respect to the pixel at the coordinates (X, Y) is stored in the memory portion 38 at a step S39, and this control flow is terminated. After the termination of this control flow, this control flow shown in Fig. 9 is executed again with respect to subsequent projection coordinates on the basis of an input image signal.

Also when it is determined that the reference reflection amount Rs and the actual reflection amount Ra are substantially equal to each other (the reference reflection amount Rs ≒ the actual reflection amount Ra) at the step S36, this control flow is terminated. In other words, there is no breakage or loss in the portion of the screen 80 corresponding to the coordinates (X, Y), so that the corrupt flag F (X, Y) is maintained at 0, and this control flow is executed with respect to subsequent projection coordinates. Also when it is determined that the state where the reference reflection amount Rs ≠ the actual reflection amount Ra does not continue for at least the prescribed period of time at the step S37, this control flow is terminated and then is executed again. The state where the reference reflection amount Rs ≠ the actual reflection amount Ra does not continue for at least the prescribed period of time indicates a state where the user performs a prescribed input operation while locating his/her finger 1 on the VUI screen 91, as shown in Fig. 1, for example. In other words, when the VUI light receiving portion 34 detects the actual reflection amount Ra with the light receiving level P2 (see Fig. 3) at a portion on which the finger 1 is located, it is temporarily determined that the reference reflection amount Rs (light receiving level P1) ≠ the actual reflection amount Ra (light receiving level P2) at the step S36. However, the light receiving level P2 temporarily (momentarily) detected during the VUI operation disappears with the movement of the finger 1 in the VUI operation and changes to the light receiving level P1, and hence the determination whether or not the reference reflection amount Rs (light receiving level P1) ≠ the actual reflection amount Ra (light receiving level P2) at the step S36 is also terminated in less time than a prescribed period of time. Therefore, the step S37 is provided, whereby it is avoided that the reflected light (light receiving level P2) of the finger 1 through this VUI operation leads to the erroneous determination that "there is a breakage".

When determining that the corrupt flag F (X, Y) = 1 at the coordinates (X, Y) at the step S32, the main control portion 31 determines whether or not the display mode is initialized to the "luminance reduction display mode" at a step S40.

When it is determined that the display mode is set to the "luminance reduction display mode" at the step S40, the corrected output (red: luminance value Lr*, green: luminance value Lg*, blue: luminance value Lb*) at the coordinates (X, Y) is set at a step S41. Here, Lr* = Lr/I, Lg* = Lg/I, and Lb* = Lb/I, and the correction coefficient I in each expression is set as a correction coefficient for luminance reduction. At a step S42, the main control portion 31 controls the red LD portion 24, the green LD portion 25, and the blue LD portion 26 to project the laser beams set to laser outputs corresponding to the luminance value Lr*, the luminance value Lg*, and the luminance value Lb* toward the position corresponding to the coordinates (X, Y) of the screen 80, respectively, and this control flow is terminated. After the termination of this control flow, this control flow shown in Fig. 9 is executed again with respect to subsequent projection coordinates on the basis of an input image signal.

When it is determined that the display mode is not set to the "luminance reduction display mode" (but set to the "partial display mode") at the step S40, this control flow is terminated. In other words, this control flow is executed with respect to subsequent projection coordinates without emitting the laser beam to the broken portion of the screen 80 at the coordinates (X, Y).

According to the first embodiment, as hereinabove described, the rear projector 100 is provided with the VUI light receiving portion 34 detecting at least the laser beam reflected by the finger 1 (or the touch pen) and the main control portion 31 configured to perform control of accepting an apparatus operation on the basis of the detection result of the laser beam reflected by the finger 1 obtained by the VUI light receiving portion 34 and control of detecting the breakage of the screen 80 on the basis of the detection result of the laser beam reflected by the screen 80 obtained by the VUI light receiving portion 34, whereby the single VUI light receiving portion 34 allows the user to perform the apparatus operation on the rear projector 100 (apparatus body 10) with his/her finger 1 or the like and allows the user to detect the presence or absence of breakage in the screen 80. Thus, the broken condition of the screen 80 can be easily detected while an increase in the number of components of the apparatus body 10 is suppressed, unlike the case where in addition to the VUI light receiving portion 34 for the apparatus operation (for detection of the finger 1 or the like), a light detecting portion for detection of the breakage of the screen 80 is further provided in the apparatus body 10.

According to the first embodiment, the rear projector 100 includes the memory portion 38 previously storing the reference reflection amount Rs of the laser beam reflected by the screen 80 detected by the VUI light receiving portion 34, and the main control portion 31 is configured to perform control of determining the breakage of the screen 80 on the basis of the comparison result of the actual reflection amount Ra of the laser beam reflected by the screen 80, detected by the VUI light receiving portion 34 in the state where the projection portion 20 projects the image 90 on the screen 80 and the reference reflection amount Rs stored in the memory portion 38. Thus, the reflection amount (actual reflection amount Ra) of the laser beam from the screen 80 can be quantitatively evaluated on the basis of the reflection amount of the laser beam from the screen 80 previously stored in the memory portion 38 as the reference reflection amount Rs when the breakage is detected, and hence the presence or absence of breakage in the screen 80 can be easily detected on the basis of the reference reflection amount Rs in the memory portion 38.

According to the first embodiment, the rear projector 100 is configured to previously acquire the reference reflection amount Rs as the reflection amount of the screen 80 without a breakage by emitting the laser beam to the screen 80 without a breakage and detecting the laser beam reflected by the screen 80 through the VUI light receiving portion 34, and the main control portion 31 is configured to perform control of determining the breakage of the screen 80 on the basis of the comparison result of the actual reflection amount Ra of the laser beam reflected by the screen 80, detected by the VUI light receiving portion 34 in the state where the projection portion 20 projects the image 90 on the screen 80 and the reference reflection amount Rs. Thus, the actual reflection amount Ra of the laser beam from the screen 80 can be compared with the reference reflection amount Rs of the laser beam from the screen 80 without a breakage when the breakage is detected, and hence the presence or absence of breakage in the screen 80 can be reliably and easily detected.

According to the first embodiment, the main control portion 31 is configured to determine that there is a breakage in the screen 80 when determining that the state where there is the difference between the reference reflection amount Rs and the actual reflection amount Ra continues for at least the prescribed period of time. Thus, the erroneous detection of the broken condition of the screen 80 resulting from detection of the laser beam reflected by the finger 1, the touch pen, or the like temporarily arranged on the screen 80 in order to perform the apparatus operation on the apparatus body 10 can be reliably avoided when the main control portion 31 detects the breakage. Thus, the broken condition of the screen 80 can be more accurately detected, effectively utilizing the VUI light receiving portion 34 configured to detect the laser beam reflected by the finger 1, the touch pen, or the like used to operate the apparatus body 10.

According to the first embodiment, the main control portion 31 is configured to perform control of reducing the luminance of the laser beam emitted to the broken portion of the screen 80 in the image 90 projected on the screen 80 (luminance reduction display mode) or control of stopping the emission of the laser beam to the broken portion of the screen 80 (partial display mode) and perform control of continuing the projection of the image 90 on the portion (unbroken portion or region) of the screen 80 other than the broken portion without reducing the luminance of the laser beam when determining that there is a breakage in the screen 80. Thus, even when there is a breakage in the screen 80, the projection of the image 90 to be projected can be continued without complete cancellation although the luminance of the laser beam emitted to the broken portion is reduced or the emission of the laser beam is stopped. Thus, a situation in which the image 90 (including a picture) to be projected is not projected at all due to the partial breakage (loss) of the screen 80 can be avoided. For example, a situation in which a normal electronic advertisement, urgent information displayed when a disaster strikes, etc. are not displayed at all due to the partial breakage (loss) of the screen 80 is avoided, and hence the rear projector 100 can be beneficially used. Furthermore, the rear projector 100 can continue to be used until the repair of the screen 80, and hence the rear projector 100 can be beneficially used also in this respect.

According to the first embodiment, the user can select the control of reducing the luminance of the laser beam emitted to the broken portion of the screen 80 in the image 90 projected on the screen 80 (luminance reduction display mode) or the control of stopping the emission of the laser beam to the broken portion of the screen 80 (partial display mode). Thus, the user can select and determine a projection operation mode of the "luminance reduction display mode" or the "partial display mode" as the operation of the rear projector 100 when there is a breakage in the screen 80, and hence the convenience of the rear projector 100 can be improved when the rear projector 100 is used.

According to the first embodiment, the main control portion 31 is configured to perform control of detecting the breakage of the screen 80 on the basis of the detection result of the laser beam reflected by the screen 80 obtained by the VUI light receiving portion 34 when the projection portion 20 projects the image 90 on the screen 80. Thus, the broken condition (presence or absence of breakage) of the screen 80 can be detected on the basis of the detection result of the laser beam reflected by the screen 80 at the same timing as the normal projection operation of projecting the image 90 on the screen 80, and hence the broken condition (presence or absence of breakage) of the screen 80 can be promptly detected while the image 90 is projected on the screen 80. In other words, a dedicated inspection mode (the operation of detecting the breakage of the screen 80) for detecting the broken condition of the screen 80 different from the normal mode may not be performed in a state where the normal projection operation is temporarily stopped (interrupted), so that the convenience of the rear projector 100 can be improved when the rear projector 100 is used.

According to the first embodiment, the image 90 is constituted by the plurality of pixels each having a prescribed luminance value, and the main control portion 31 is configured to perform control of detecting the breakage of the screen 80 on the basis of the detection result of the laser beam reflected by the screen 80 obtained by the VUI light receiving portion 34 for each of the plurality of pixels. Thus, the presence or absence of breakage in the screen 80 can be minutely detected per pixel constituting the image 90 projected on the screen 80 while the laser beam is scanned. Thus, the very small breakage of the screen 80 generated per pixel can be also detected, and hence the broken condition of the screen 80 can be detected with high detection accuracy.

According to the first embodiment, the screen 80 includes a transmissive screen through which the laser beam emitted from a first side (Z2 side) of the screen 80 by the projection portion 20 can penetrate to a second side (Z1 side) of the screen 80, and the main control portion 31 is configured to perform control of accepting the VUI operation on the basis of the detection result, obtained by the VUI light receiving portion 34, of the laser beam emitted from the first side (Z2 side), penetrating through the screen 80, and thereafter being reflected to the first side (Z2 side) by the finger 1, the touch pen, or the like arranged on the second side (Z1 side), penetrating through the screen 80 and control of detecting the breakage of the screen 80 on the basis of the detection result, obtained by the VUI light receiving portion 34, of the laser beam emitted from the first side (Z2 side), reflected to the first side (Z2 side) by the screen 80. Thus, in the rear projector 100 configured such that the image 90 (VUI screens 91 and 92) projected on the screen 80 from the rear side (Z2 side) of the screen 80 can be viewed from the front side (Z1 side) of the screen 80 and the VUI operation can be performed through the VUI screens 91 and 92, the broken condition of the screen 80 can be easily detected while the increase in the number of components of the apparatus body 10 is effectively suppressed.

### (Second Embodiment)

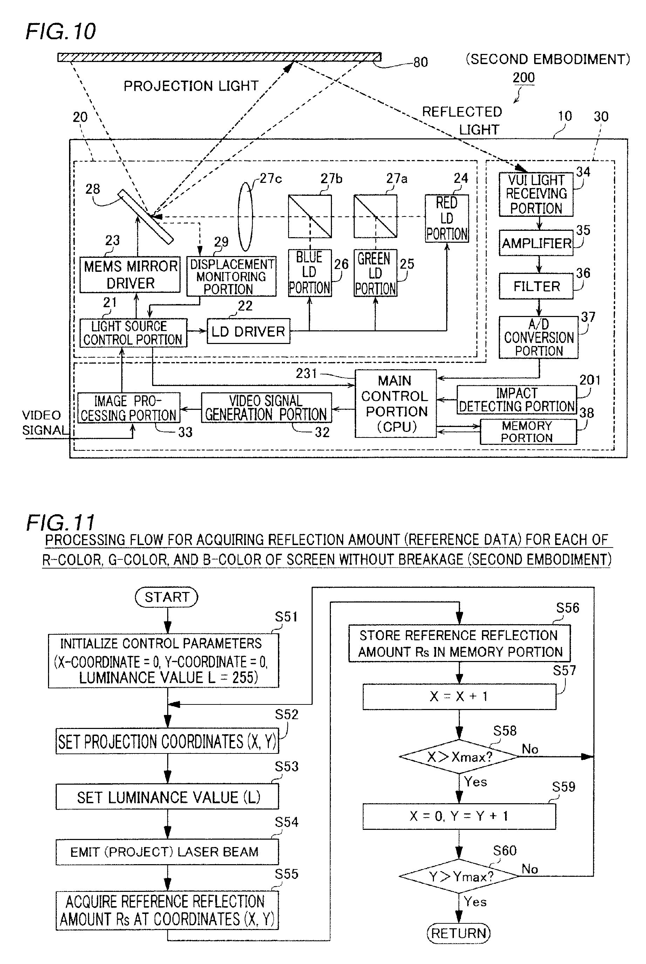

A second embodiment is now described with reference to Figs. 10 to 12. In this second embodiment, a rear projector 200 is configured to start a "breakage detection operation mode" of a screen 80 when an apparatus body 10 detects an impact during the projection of an image 90 (picture) on the screen 80. The rear projector 200 is an example of the "projector" in the present invention. In the figure, a structure similar to that of the rear projector 100 according to the aforementioned first embodiment is denoted by the same reference numerals.

The rear projector 200 according to the second embodiment of the present invention includes an impact detecting portion 201, as shown in Fig. 10. The impact detecting portion 201 is mounted on a prescribed position in the apparatus body 10 and is electrically connected to a main control portion 231 of a VUI portion 30. The impact detecting portion 201 has a function of detecting the presence or absence of an impact externally applied to the rear projector 200 integrated with the screen 80 and the magnitude of the impact, and an output signal is input into the main control portion 231 when the impact detecting portion 201 detects the impact. The main control portion 231 is an example of the "control portion" in the present invention.

According to the second embodiment, the rear projector 200 is configured to detect the broken condition (the presence or absence of breakage) of the screen 80 on the basis of a detection result of a laser beam reflected by the screen 80 obtained by a VUI light receiving portion 34 when the impact detecting portion 201 detects the impact. Furthermore, the rear projector 200 is configured to emit a laser beam from each of a red LD portion 24, a green LD portion 25, and a blue LD portion 26 at an output corresponding to a 255th gradation (maximum luminance) corresponding to an "all-white image" and detect the broken condition (the presence or absence of breakage) of the screen 80 on the basis of the detection result of the laser beam (reflected light) at the maximum luminance reflected by the screen 80 obtained by the VUI light receiving portion 34 when the breakage of the screen 80 is detected.

A processing flow of the main control portion 231 at the time when the impact is applied to the apparatus body 10 during the projection of the image 90 (picture) on the screen 80 by the rear projector 200 according to the second embodiment is now described with reference to Figs. 6 and 10 to 12.

Also according to the second embodiment, first, the laser beam is emitted to the screen 80 (see Fig. 10) without a breakage, a defect, or the like, and the reflected light (reference reflection amount Rs) reflected by the screen 80 is automatically measured by the VUI light receiving portion 34 (see Fig. 10) when the apparatus body 10 (see Fig. 10) is powered at the time of factory shipment inspection performed immediately after the rear projector 200 (see Fig. 10) is assembled. However, the range (data amount) of acquisition data of the reference reflection amount Rs is different from that in the aforementioned first embodiment.

A specific method for acquiring the reflection amount data (reference reflection amount Rs) that the screen 80 without a breakage has at each of steps S1, S2, and S3 shown in Fig. 6 is now described with reference to Fig. 11. An initialization operation with respect to an R-color (red color) executed at the step S1 is described here. At the steps S2 and S3, the driven LD portion (light source portion) is sequentially shifted from the red LD portion 24 (see Fig. 10) to the green LD portion 25 (see Fig. 10) and from the green LD portion 25 to the blue LD portion 26 (see Fig. 10), and the same operation is performed. Thus, the description is omitted.

As shown in Fig. 11, control parameters are initialized at a step S51. In other words, the main control portion 231 (see Fig. 10) initializes projection coordinates (X, Y) on the screen 80 (see Fig. 10) as the control parameters to coordinates (X, Y) = (0, 0) and sets the luminance value (R-color gradation value) of the laser beam from the red LD portion 24 (see Fig. 10) to the 255th gradation (luminance value Lr = 255) that is a maximum luminance. Then, the projection coordinates (= coordinates (0, 0)) of the laser beam from the red LD portion 24 are set at a step S52, and the output (luminance value: R-color gradation value) of the laser beam is set at a step S53. In this case, the output is set such that the laser beam having the 255th gradation (luminance value Lr = 255) is emitted from the red LD portion 24.

Thereafter, the main control portion 231 drives a MEMS mirror 28 (see Fig. 10) to project the laser beam having the 255th gradation from the red LD portion 24 toward a position corresponding to the coordinates (0, 0) of the screen 80 at a step S54. Then, the reflected light reflected by the screen 80 is measured with the VUI light receiving portion 34 (see Fig. 10), whereby the reference reflection amount Rs is acquired at a step S55. Then, the reference reflection amount Rs of the 255th gradation at the coordinates (0, 0) is stored in a memory portion 38 (see Fig. 10) at a step S56.

The X-coordinate is incremented by one at a step S57. At a step S58, it is determined whether or not the current X-coordinate exceeds a coordinate Xₘₐₓ, and when it is determined that the current X-coordinate does not exceed the coordinate Xₘₐₓ, the processing returns to the step S52. The processing operations at the steps S52 to S58 are repeated until the current X-coordinate exceeds the coordinate Xₘₐₓ.

When it is determined that the current X-coordinate exceeds the coordinate Xₘₐₓ at the step S58, the processing advances to a step S59, the X-coordinate is brought back to 0, and the Y-coordinate is incremented by one. Then, it is determined whether or not the current Y-coordinate exceeds a coordinate Yₘₐₓ at a step S60, and when it is determined that the current Y-coordinate does not exceed the coordinate Yₘₐₓ, the processing returns to the step S52. The processing operations at the steps S52 to S60 are repeated until the current coordinates exceed the coordinates (Xₘₐₓ, Yₘₐₓ), and this control flow is terminated. At this point, the reference reflection amount Rs for each pixel from the screen 80 in the case where the red laser beam is projected on an entire projection area (a position corresponding to each pixel from the coordinates (0, 0) to the coordinates (Xₘₐₓ, Yₘₐₓ)) of the screen 80 at the 255th gradation (luminance value Lr = 255) is stored in the memory portion 38. In other words, the number of data corresponding to (Xₘₐₓ + 1) × (Yₘₐₓ + 1) pixels at the 255th gradation is accumulated in the memory portion 38.

At the step S2 shown in Fig. 6, only the green LD portion 25 is driven, and the steps S51 to S60 shown in Fig. 11 are executed similarly. At the step S3 shown in Fig. 6, only the blue LD portion 26 is driven, and the steps S51 to S60 shown in Fig. 11 are executed similarly. Consequently, the reference reflection amount Rs (Rs at the luminance value Lr = 255, Rs at the luminance value Lg = 255, and Rs at the luminance value Lb = 255) for each pixel from the screen 80 in the case where each of the laser beam from the red LD portion 24, the laser beam from the green LD portion 25, and the laser beam from the blue LD portion 26 is projected on the entire projection area of the screen 80 at only the 255th gradation is stored in the memory portion 38. In other words, according to the second embodiment, the reference reflection amount Rs (the number of data corresponding to (Xₘₐₓ + 1) × (Yₘₐₓ + 1) pixels × 1 gradation (255th gradation) × three RGB primary colors) for each pixel in the case where the "all-white image" is projected on the screen 80 for each of three RGB primary colors is eventually accumulated in the memory portion 38. Thus, the reference reflection amount Rs referred to when it is determined whether or not there is a breakage in the screen 80 is previously acquired by emitting the laser beam to the screen 80 without a breakage, defect, or the like (the database is initialized). According to the second embodiment, only the reference reflection amount Rs of the "all-white image" that is one gradation value is accumulated in the memory portion 38, and hence the data accumulation amount in the memory portion 38 in this case is suppressed to one-255th of the data accumulation amount in the memory portion 38 according to the first embodiment.

A processing flow of the main control portion 231 for actually projecting the image 90 by the rear projector 200 is now described.

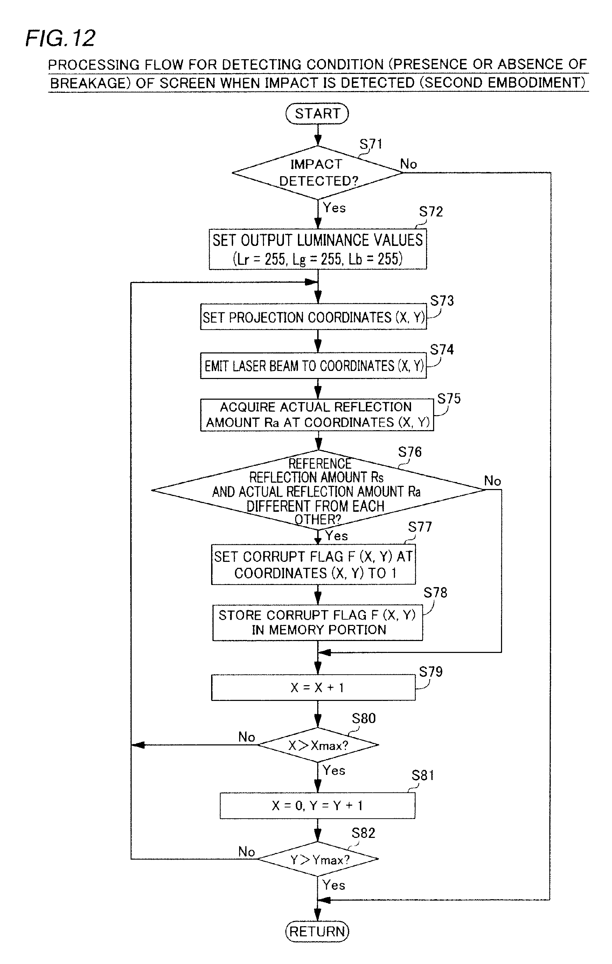

As shown in Fig. 12, first, the main control portion 231 (see Fig. 10) determines whether or not the impact is applied to the apparatus body 10 (see Fig. 10) while the main control portion 231 constantly monitors the output signal obtained by the impact detecting portion 201 (see Fig. 10) at a step S71. In other words, the main control portion 231 determines whether or not the impact detecting portion 201 detects the impact on the apparatus body 10. When the main control portion 231 determines that the impact detecting portion 201 does not detect the impact at the step S71, this control flow is terminated and then is executed again.

When determining that the impact detecting portion 201 detects the impact on the apparatus body 10 at the step S71, the main control portion 231 sets each of the luminance value Lr (R-color gradation value) of the laser beam from the red LD portion 24 (see Fig. 10), the luminance value Lg (G-color gradation value) of the laser beam from the green LD portion 25 (see Fig. 10), and the luminance value Lb (B-color gradation value) of the laser beam from the blue LD portion 26 (see Fig. 10) to the 255th gradation that is a maximum luminance value at a step S72. Then, the coordinates (X, Y) of the screen 80 (see Fig. 10) on which the laser beam is projected are set at a step S73. In this case, the coordinates (X, Y) are set such that the laser beam is projected toward the position corresponding to the coordinates (0, 0) of the screen 80.

Then, the main control portion 231 controls the red LD portion 24, the green LD portion 25, and the blue LD portion 26 to project the laser beams set to laser outputs corresponding to the luminance value Lr (= 255), the luminance value Lg (= 255), and the luminance value Lb (= 255) toward the position corresponding to the coordinates (0, 0) of the screen 80, respectively, at a step S74. Then, the laser beam (reflected light) reflected by the screen 80 at the position corresponding to the coordinates (0, 0) is measured with the VUI light receiving portion 34 (see Fig. 10), whereby the current actual reflection amount Ra is acquired at a step S75.

Then, the main control portion 231 compares the reference reflection amount Rs and the actual reflection amount Ra in the case where the laser beam is projected on the coordinates (0, 0) at the output luminance value (luminance value Lr = 255, luminance value Lg = 255, luminance value Lb = 255) with each other at a step S76. According to the second embodiment, the reference reflection amount Rs is calculated as the sum of the reflection amount Rs (r255) at the luminance value Lr (= 255) of an R-color constituting a pixel at the coordinates (0, 0), the reflection amount Rs (g255) at the luminance value Lg (= 255) of a G-color constituting the pixel at the coordinates (0, 0), and the reflection amount Rs (b255) at the luminance value Lb (= 255) of a B-color constituting the pixel at the coordinates (0, 0) (Rs = Rs(r255) + Rs(g255) + Rs(b255)). In other words, the main control portion 231 extracts the reflection amount Rs(r255) corresponding to the luminance value Lr (= 255) at the coordinates (0, 0) in an R-color reflection amount table 101, the reflection amount Rs(g255) corresponding to the luminance value Lg (= 255) at the coordinates (0, 0) in the G-color reflection amount table 102, and the reflection amount Rs(b255) corresponding to the luminance value Lb (= 255) at the coordinates (0, 0) in the B-color reflection amount table 103 from the memory portion 38 and calculates the reference reflection amount Rs.

When it is determined that the actual reflection amount Ra is different from the reference reflection amount Rs at the step S76, 1 is newly assigned to a corrupt flag F (X, Y) at the coordinates (0, 0) at a step S77. Then, the corrupt flag F (0, 0) (= 1) at the coordinates (0, 0) is stored in the memory portion 38 at a step S78.

The X-coordinate is incremented by one at a step S79. At a step S80, it is determined whether or not the current X-coordinate exceeds the coordinate Xₘₐₓ, and when it is determined that the current X-coordinate does not exceed the coordinate Xₘₐₓ, the processing returns to the step S73. The processing operations at the steps S73 to S80 are repeated until the current X-coordinate exceeds the coordinate Xₘₐₓ.

When it is determined that the current X-coordinate exceeds the coordinate Xₘₐₓ at the step S80, the processing advances to a step S81, the X-coordinate is brought back to 0, and the Y-coordinate is incremented by one. Then, it is determined whether or not the current Y-coordinate exceeds the coordinate Yₘₐₓ at a step S82, and when it is determined that the current Y-coordinate does not exceed the coordinate Yₘₐₓ, the processing returns to the step S73. The processing operations at the steps S73 to S82 are repeated until the current coordinates exceed the coordinates (Xₘₐₓ, Yₘₐₓ), and this control flow is terminated.

When it is determined that the reference reflection amount Rs and the actual reflection amount Ra from the screen 80 in the case where the "all-white image" is projected are substantially equal to each other (the reference reflection amount Rs ≒ the actual reflection amount Ra) at the step S76, the processing advances to the aforementioned processing after the step S79. In other words, it is determined that there is no breakage or loss in the portion of the screen 80 corresponding to the coordinates (0, 0) (the corrupt flag F (X, Y) is maintained at 0), and this control flow is executed again with respect to subsequent projection coordinates.

In the rear projector 200, a normal projection operation is temporarily interrupted, and the aforementioned processing operations (breakage detection operation) at the steps S71 to S82 are executed as interrupt processing when the impact on the apparatus body 10 is detected. After these processing operations are terminated, the normal projection operation is executed again.

The remaining structure of the rear projector 200 according to the second embodiment is similar to that of the rear projector 100 according to the aforementioned first embodiment.

According to the second embodiment, as hereinabove described, the rear projector 200 is provided with the impact detecting portion 201 configured to detect the impact on the apparatus body 10, and the main control portion 231 is configured to perform control of detecting the breakage of the screen 80 on the basis of the detection result of the laser beam reflected by the screen 80 obtained by the VUI light receiving portion 34 when the impact detecting portion 201 detects the impact. Thus, the broken condition (the presence or absence of breakage) of the screen 80 can be detected using the detection of the impact by the impact detecting portion 201 as a trigger, and hence the broken condition (the presence or absence of breakage) of the screen 80 can be promptly detected in synchronization with the timing at which impact force likely to cause the breakage of the screen 80 is applied.

According to the second embodiment, the main control portion 231 is configured to perform control of emitting each of the red, green, and blue laser beams at the output corresponding to the 255th gradation (maximum luminance) corresponding to the "all-white image" and detecting the breakage of the screen 80 on the basis of the detection result of the laser beam (255th gradation) reflected by the screen 80 obtained by the VUI light receiving portion 34 when the impact detecting portion 201 detects the impact. Thus, the actual reflection amount Ra of the laser beam from the screen 80 at the maximum luminance at which the projected image 90 is displayed most brightly as the "all-white image" can be detected, and hence the slightly broken or lost portion of the screen 80 caused by the impact force can be reliably detected. The remaining effects of the second embodiment are similar to those of the aforementioned first embodiment.

### (Third Embodiment)

The structure of a rear projector 300 according to a third embodiment of the present invention is now described with reference to Figs. 2, 3, 9 to 11, and 13 to 20. The rear projector 300 is an example of the "projector" in the present invention.

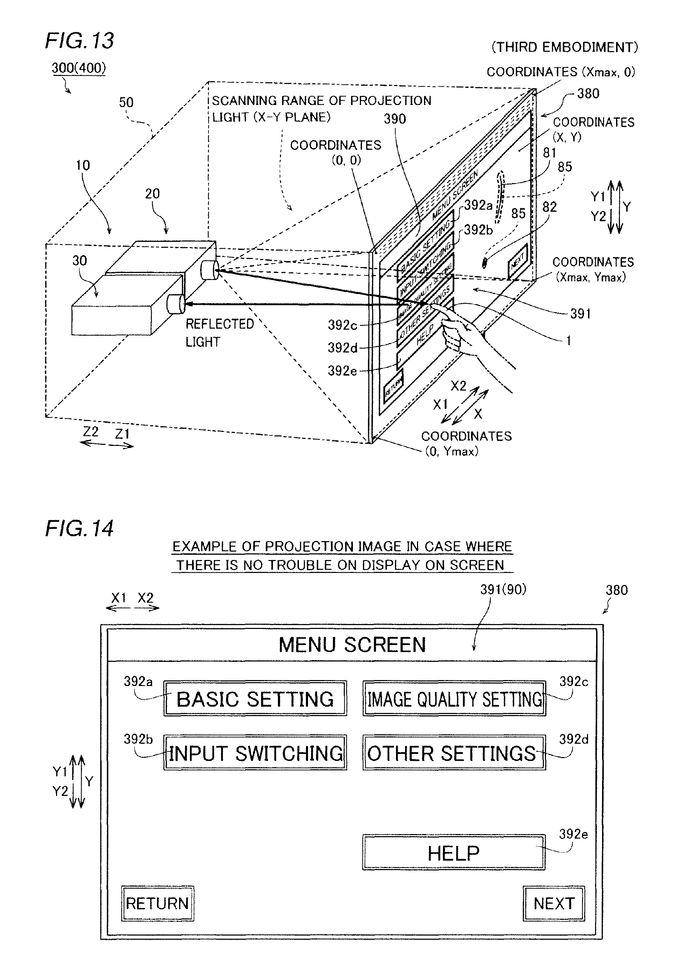

The rear projector 300 according to the third embodiment of the present invention includes an apparatus body 10 into which a projection portion 20 is built and a transmissive screen 380, as shown in Fig. 13. Also in the rear projector 300 (see Fig. 2), the outputs of laser beams emitted from a red LD portion 24, a green LD portion 25, and a blue LD portion 26 and the posture of a MEMS mirror 28 are varied for each pair of projection coordinates on the screen 380 on the basis of the control of an LD driver 22 and a MEMS mirror driver 23 performed by a light source control portion 21, whereby a laser beam is two-dimensionally scanned on the screen 380 for each pixel, and an image 90 of one frame is projected. The image 90 projected by the projection portion 20 contains a VUI screen 391 (see Fig. 13) configured to be capable of accepting a VUI operation. The VUI screen 391 is an example of the "operation screen" in the present invention.

When the image 90 is projected on the screen 380, the VUI light receiving portion 34 (see Fig. 2) functions similarly to the case of the aforementioned first embodiment. In other words, the VUI light receiving portion 34 detects reflected light at any of light receiving levels P1 to P5 shown in Fig. 3 according to the condition (the presence or absence of trouble such as a breakage or loss) of the screen 380 (see Fig. 13).

When there is trouble such as a breakage or loss in a prescribed portion (projection surface) of the screen 380 or when there is such trouble that extraneous material such as dust is attached, the laser beam (reflected light) reflected by the screen 380 at a portion or region causing trouble in display contents is detected by the VUI light receiving portion 34 at the light receiving level P3, P4, or P5 different from the light receiving level P1. In the portion (region) where the light receiving level P3, P4, or P5 is detected, the image 90 is lost due to the breakage or the image 90 is distorted due to the contamination even though the entire image 90 is projected, whereby the information is lost. In other words, the portion (region) where the light receiving level P3, P4, or P5 is detected is a portion in a non-normal display state. The portion (region) of the screen 380 causing trouble on display is an example of the "portion unsuitable for projection" in the present invention. The normal portion (region) of the screen 380 not causing trouble on display is an example of the "portion other than the portion unsuitable for projection" in the present invention.

Therefore, according to the third embodiment, the rear projector 300 focuses attention on the magnitude (actual reflection amount) of the reflected light varying with the physical condition (the state of occurrence of breakage and loss and the state of attachment of extraneous material such as dust) of the screen 380, whereby the presence or absence of the portion of the screen 380 causing trouble on display is detected on the basis of a detection result of the laser beam reflected by the screen 380 obtained by the VUI light receiving portion 34. In other words, the rear projector 300 has a VUI operation function and is configured to detect the portion of the screen 380 causing trouble on display (the portion where there are a breakage and a loss or the portion where extraneous material such as dust is attached) on the basis of the detection result of the laser beam reflected by the screen 380, utilizing the VUI light receiving portion 34.

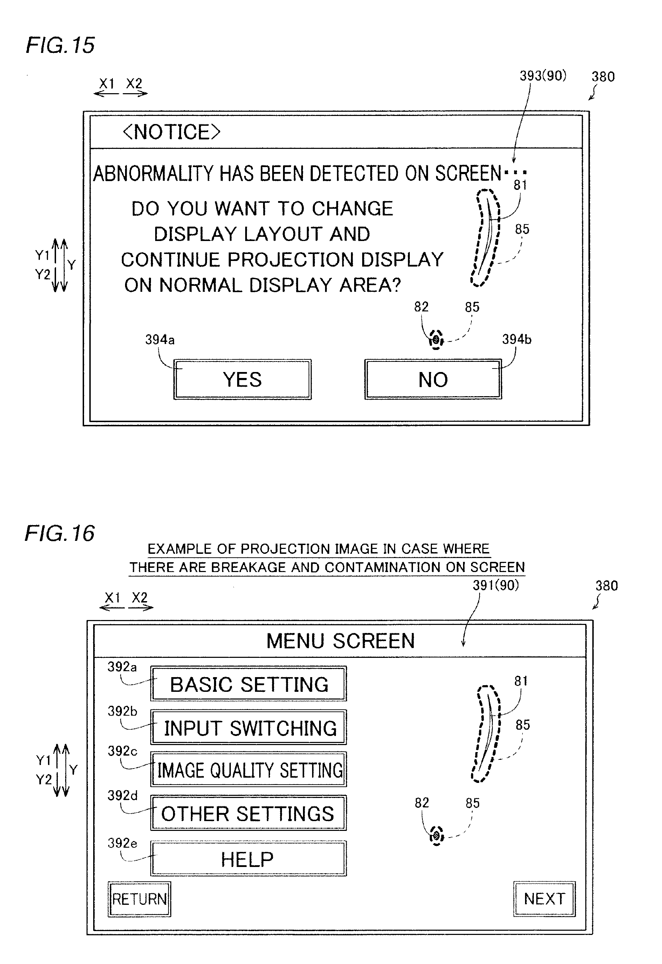

According to the third embodiment, when the portion (a broken portion 81 and a contaminated portion 82 shown in Fig. 16) causing trouble on the display of the VUI screen 391 constituting the image 90 is detected on the screen 380, the VUI screen 391 is displayed in such a manner as to avoid the portion causing trouble on display. When it is previously proved that the VUI screen 391 partially overlaps the portion (the broken portion 81 and the contaminated portion 82 shown in Fig. 16) of the screen 380 having trouble, the display layout of the VUI screen 391 is changed such that the VUI screen 391 is displayed only on the portion not causing trouble on display (the normal portion suitable for projection other than the broken portion 81 and the contaminated portion 82), and the VUI screen 391 is projected on the screen 380. Thus, the laser beam from the projection portion 20 (see Fig. 2) is not emitted to the portion of the screen 380 causing trouble on display. The broken portion 81 and the contaminated portion 82 are examples of the "portion unsuitable for projection" in the present invention.

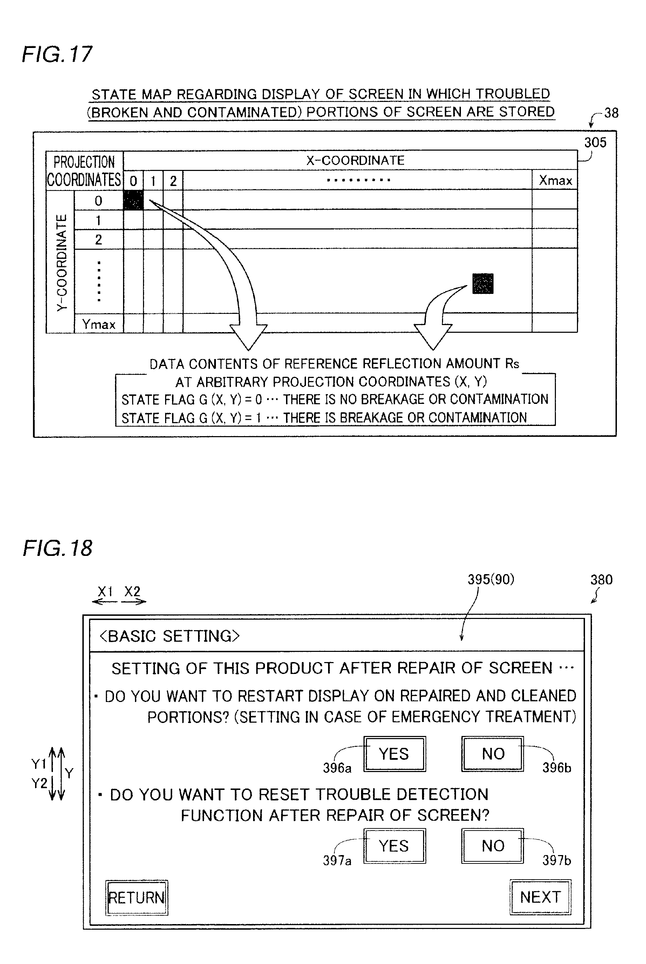

In other words, the rear projector 300 displays the VUI screen 391 with a normal display layout shown in Fig. 14 when there is no portion causing trouble on display on the screen 380. When there are the broken portion 81 and the contaminated portion 82 causing trouble on display in a central region on the right side (X2 side) of the screen 380, on the other hand, a button image 392c displayed as "image quality setting", a button image 392d displayed as "other settings", and a button image 392e displayed as "help" constituting the VUI screen 391 are moved to a left (X1 side) region in order to avoid the broken portion 81 and the contaminated portion 82, as shown in Fig. 16. Display intervals in a vertical direction (direction Y) between a button image 392a displayed as "basic setting" and a button image 392b displayed as "input switching" originally located on the left side (X1 side) in addition to the button image 392c, the button image 392d, and the button image 392e are adjusted, and all the button images 392a to 392e are displayed on the left (X1 side) region. In the state of Fig. 14, it is previously proved on the basis of a state map 305 (see Fig. 17) described later that the button images 392c and 392d overlap the broken portion 81 and the button image 392e overlaps the contaminated portion 82. Thus, in the VUI screen 391 shown in Fig. 16, the display layout of the entire VUI screen 391 is changed such that the display positions (projection positions) of the button images 392c, 392d, and 392e are moved to the left side.

According to the third embodiment, the laser beam scanned by the projection portion 20 and reflected by the screen 380 is sequentially detected by the VUI light receiving portion 34, whereby the projection coordinates of the broken portion 81 and the contaminated portion 82 causing trouble on display on the screen 380 are previously grasped. Furthermore, the projection coordinates of the portion (the normal portion other than the broken portion 81 and the contaminated portion 82) not causing trouble on display on the screen 380 are also grasped simultaneously with this.

More specifically, after the reflected light from the screen 380 is detected, the state map 305 regarding the display of the screen 380 shown in Fig. 17 is previously stored in a memory portion 38 (see Fig. 2). In the state map 305, a state flag G (X, Y) (= 0) is stored when there is no breakage, loss, or contamination in a portion of the screen 380 corresponding to the position of coordinates (X, Y), and a state flag G (X, Y) (= 1) is stored when there is a breakage, loss, or contamination in the portion of the screen 380 corresponding to the position of the coordinates (X, Y). Therefore, a main control portion 31 refers to the state map 305 to grasp the condition (the presence or absence of trouble) of the entire screen 380. When the broken portion 81 and the contaminated portion 82 (see Fig. 16) causing trouble on display on the screen 380 are detected, the display layout of the entire VUI screen 391 is changed in order to avoid the broken portion 81, and the contaminated portion 82 and the VUI screen 391 is projected only on the normal portion of the screen 380 on the basis of the state map 305 storing the positional information (the projection coordinates where the state flag G (X , Y) = 1) of the broken portion 81 and the contaminated portion 82 on the screen 380 and the positional information (the projection coordinates where the state flag G (X, Y) = 0) of the normal portion other than the broken portion 81 and the contaminated portion 82 on the screen 380. The projection coordinates (X, Y) where the state flag G (X, Y) = 1, stored in the state map 305 is an example of the "positional information of the portion unsuitable for projection" in the present invention.

Thus, in the rear projector 300, the display layout of the VUI screen 391 is changed, whereby the VUI screen 391 (image 90) is projected on the normal portion (the portion other than the broken portion 81 and the contaminated portion 82) of the screen 380 while the completeness of information contained in the VUI screen 391 is maintained (without missing the information contained in the VUI screen 391).

According to the third embodiment, when the broken portion 81 and the contaminated portion 82 causing trouble on display are detected on the screen 380, a user is notified that the broken portion 81 and the contaminated portion 82 are detected. In other words, when the broken portion 81 and the contaminated portion 82 causing trouble on display are detected on the screen 380, a notification screen 393 shown in Fig. 15 is displayed. The user can select whether or not to change the display layout such that the VUI screen 391 is displayed on a normal portion other than the broke portion 81 and the contaminated portion 82 causing trouble on display and project the VUI screen 391 on the screen 380 through the notification screen 393. In this case, specifically, when a button image 394a of "YES" in the notification screen 393 is selected, the display layout is changed to display the VUI scree 391 on the normal portion other than the broken portion 81 and the contaminated portion 82 causing trouble on display, and a display mode is set to a "display layout change mode" for performing an operation of projecting the VUI screen 391 on the screen 380. When a button image 394b of "NO" is selected, the display mode is set to a "luminance reduction display mode" for reducing the luminance of the laser beam in portions of the VUI screen 391 corresponding to the broken portion 81 and the contaminated portion 82 of the screen 380. This "luminance reduction display mode" is provided as a display mode that may be selected only in the case where the image 90 can be properly displayed without losing the information of the entire image 90 even if the laser beam is projected in a state where the luminance is reduced only with respect to the broken portion 81 and the contaminated portion 82 without changing the entire display layout when the broken portion 81 and the contaminated portion 82 are very small. In a default state in shipping of a product or the like, the "display layout change mode" is set. The notification screen 393 is an example of the "operation screen" or the "screen configured to ask the user whether or not to perform control of projecting the image on the screen while avoiding the portion unsuitable for projection" in the present invention.

As shown in Fig. 15, also when this notification screen 393 is displayed, the display layout of the entire notification screen 393 is changed, whereby characters (a message) and the button images 394a and 394b in the notification screen 393 are projected only on the normal portion not causing trouble on display while avoiding the broken portion 81 and the contaminated portion 82 causing trouble on display.

Also according to the third embodiment, the laser beam is emitted to the screen 380 without trouble (the broken portion 81, the contaminated portion 82, etc.) in shipping from the factory or the like, and the laser beam reflected by the screen 380 is detected by the VUI light receiving portion 34, whereby the reference reflection amount Rs (= light receiving level P1) of the screen 380 without trouble is previously acquired and stored in the memory portion 38 (see Fig. 2). The trouble (the broken portion 81 and the contaminated portion 82) of the screen 380 is determined on the basis of a comparison result of the actual reflection amount Ra (= light receiving level P1, P2, P3, P4, or P5 (see Fig. 3)) of the laser beam reflected by the screen 380, detected by the VUI light receiving portion 34 in a state where the projection portion 20 projects the prescribed image 90 on the screen 380 and the reference reflection amount Rs (= light receiving level P1). The detected troubled condition of the screen 380 (the portion of the screen 380 where there are the broken portion 81 and the contaminated portion 82 and the normal portion of the screen 380) is stored in the memory portion 38 (see Fig. 2) as the aforementioned state map 305 (see Fig. 17) after the troubled condition is determined. These points are described in detail in a control flow of the rear projector 300, described later.

An operation of detecting the trouble of the screen 380 is performed for each of a plurality of pixels constituting the image 90 by the VUI light receiving portion 34, similarly to the aforementioned first embodiment. Thus, the presence or absence of trouble on the screen 380 is minutely detected per pixel constituting the image 90 projected on the screen 380.

Also in the rear projector 300, the trouble of the screen 380 such as a breakage or contamination is detected on the basis of the detection result of the laser beam reflected by the screen 380 obtained by the VUI light receiving portion 34 in the case where the projection portion 20 first projects the image 90 on the screen 380 such as when the apparatus body 10 is powered. In other words, the presence or absence of trouble on the screen 380 is detected on the basis of the detection result of the laser beam reflected by the screen 380 at the same timing as a normal projection operation of projecting the image 90 on the screen 380, and the presence or absence of trouble on the screen 380 is promptly detected while the image 90 is projected.

According to the third embodiment, the main control portion 31 also performs control of displaying the broken portion 81 and the contaminated portion 82 in a state where the user can visually recognize the broken portion 81 and the contaminated portion 82 when performing control of changing the display layout and projecting the image 90 on the screen 380, as shown in Fig. 16. Specifically, light red broken lines 85 surrounding portions of the screen 380 corresponding to the outer peripheries of the broken portion 81 and the contaminated portion 82 are illuminated, whereby the user visually recognizes the broken portion 81 and the contaminated portion 82. The broken lines 85 may be another color other than red so far as the user can visually recognize the color.

Also in the rear projector 300, the troubled portion of the screen 380 is repaired when the trouble of the screen 380 is detected. The contamination on a surface of the screen 380 is cleaned. Therefore, the user can set the projection operation when the rear projector 300 is used again after repair (maintenance).

More specifically, a VUI screen 395 shown in Fig. 18 is prepared in the rear projector 300. In other words, similarly to the VUI screen 391 shown in Fig. 14, the VUI screen 395 contained in a setting screen is provided with button images 396a and 396b configured to select the display mode of the imager 90 after repair according to the degree of repair of the screen 380. The VUI screen 395 is further provided with button images 397a and 397b configured to select whether or not database on the operation of detecting the trouble of the screen 380 after repair is initialized (an operation of reacquiring the reference reflection amount Rs of the repaired screen 380 and re-registering the data in the memory portion 38 is performed). The VUI screen 395 is an example of the "operation screen" in the present invention.

In the case where the button image 396a is selected, the image 90 is normally projected on an entire projection area after repair. This selection content may be selected when the screen 380 is completely repaired (replaced). In the case where the button image 396b is selected, the image 90 is not normally projected on a repaired portion (pixel region) of the screen 380 even after repair. In other words, the "display layout change mode" set through the notification screen 393 shown in Fig. 15 is continued even after repair. This selection content can be selected when the screen 380 on which emergency treatment is implemented is used. The "display layout change mode" corresponding to the button image 396b is set in the default state in shipping of a product or the like.

In the case where the button image 397a is selected, the reference reflection amount Rs of the screen 380 without a breakage is reacquired and is overwritten and updated (re-registered) in the memory portion 38 when the apparatus body 10 is powered after repair. This selection content may be selected when the user wishes to reset the operation of detecting the breakage by reacquiring the reference reflection amount Rs used to determine breakage detection in any of these cases where the screen 380 is completely repaired (replaced) and only the emergency treatment is implemented on the screen 380. In the case where the button image 397b is selected, the operation of detecting the breakage is performed also on the repaired screen 380, using the reference reflection amount Rs originally acquired before repair (at the time of purchase of a new screen 380). This selection content corresponds to the case where the user determines that it is not necessary to reacquire the reference reflection amount Rs after repair, such as the case where minor repair such as the emergency treatment is performed on the screen 380. An "operation mode of repairing and reacquiring the reference reflection amount Rs" corresponding to the button image 397a is set in the default state.

A processing flow of the main control portion 31 for performing the operation of projecting the image 90 (picture) on the screen 380 in the rear projector 300 according to the third embodiment is now described with reference to Figs. 1, 2, 6 to 8, 13, 19, and 20.

Similarly to in the rear projector 100 (see Fig. 1), the laser beam is emitted to the screen 380 (see Fig. 13) without trouble such as a breakage, defect, contamination, or the like, and the reflected light (light receiving level P1 (see Fig. 3)) reflected by the screen 380 is measured by the VUI light receiving portion 34 (see Fig. 2) when the apparatus body 10 (see Fig. 13) is powered at the time of factory shipment inspection. In other words, a processing flow shown in Fig. 6 is performed. Furthermore, a processing flow of the operation of the rear projector 300 for acquiring the reflection amount data (reference reflection amount Rs), shown in Fig. 7 is performed.

As shown in Fig. 8, the reference reflection amounts Rs from a first gradation to a 255th gradation of each color with respect to the entire projection area (each pixel from coordinates (0, 0) to coordinates (Xₘₐₓ, Yₘₐₓ)) of the screen 380 are stored in the memory portion 38 in a state where the reference reflection amounts Rs are divided into an R-color reflection amount table 101, a G-color reflection amount table 102, and a B-color reflection amount table 103. According to the third embodiment, the laser beam is emitted to the screen 380 without a breakage, a defect, or the like, whereby the reference reflection amount Rs referred to when it is determined whether or not there is a breakage on the screen 380 (see Fig. 13) is previously acquired.

A processing flow of the main control portion 31 for detecting the presence or absence of trouble (a breakage, a defect, and contamination) on display on the screen 380 in the rear projector 300 is now described. An operation described below is automatically performed when the apparatus body 10 is powered by the user or at the prescribed timing in the normal projection, for example.

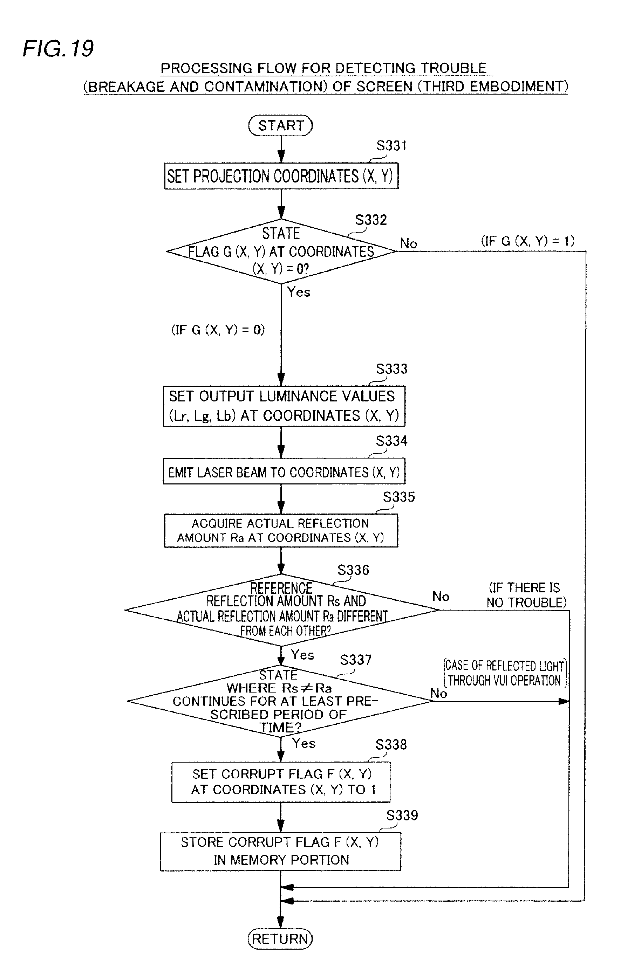

As shown in Fig. 19, first, the main control portion 31 (see Fig. 2) sets the coordinates (X, Y) of the screen 380 (see Fig. 13) on which the laser beam is projected on the basis of a prescribed image signal of an inspection image or the like at a step S331.

Then, the main control portion 31 determines whether the state flag G (X, Y) at the coordinates (X, Y) set at the step S331 is 0 or not (1) at a step S332. As described above, the state flag G (X, Y) denotes a control parameter set such that G (X, Y) = 0 when a portion of the screen 380 corresponding to the position of the coordinates (X, Y) is not broken or lost and set such that G (X, Y) = 1 when the portion of the screen 380 corresponding to the position of the coordinates (X, Y) is broken or lost.

When the main control portion 31 determines that the state flag G (X, Y) is equal to 0 at the step S332, the output (red: luminance value Lr, green: luminance value Lg, blue: luminance value Lb) of the laser beam of each color at the coordinates (X, Y) is set at a step S333. Then, in a state where the main control portion 31 sets the red LD portion 24, the green LD portion 25, and the blue LD portion 26 (see Fig. 2) to the laser outputs corresponding to the luminance value Lr, the luminance value Lg, and the luminance value Lb, respectively, the laser beam is projected to a position corresponding to the coordinates (X, Y) of the screen 380 at a step S334. Then, the laser beam (reflected light) reflected by the screen 380 at the position corresponding to the coordinates (X, Y) is measured with the VUI light receiving portion 34 (see Fig. 2), whereby a current actual reflection amount Ra is acquired at a step S335.

Then, the main control portion 31 compares the reference reflection amount Rs and the actual reflection amount Ra in the case where the laser beam is projected on the coordinates (X, Y) at the output luminance value (luminance value Lr, luminance value Lg, luminance value Lb) with each other at a step S336.

When it is determined that the actual refection amount Ra is different from the reference reflection amount Rs (a difference between the reference reflection amount Rs and the actual reflection amount Ra is more than a prescribed value) at the step S336, it is determined whether or not this state (the state where the reference reflection amount Rs ≠ the actual reflection amount Ra) continues for at least a prescribed period of time at a step S337. When it is determined that the state where Rs ≠ Ra (the state where the difference between the reference reflection amount Rs and the actual reflection amount Ra is more than the prescribed value) continues for at least the prescribed period of time at the step S337, 1 is newly set as the state flag G (X, Y) at the coordinates (X, Y) at a step S338. Then, the state flag G (X, Y) (= 1) with respect to the pixel at the coordinates (X, Y) is stored in the memory portion 38 (see Fig. 2) at a step S339, and this control flow is terminated. After the termination of this control flow, this control flow shown in Fig. 19 is executed again with respect to subsequent projection coordinates on the basis of an input image signal.

Also when it is determined that the reference reflection amount Rs and the actual reflection amount Ra are substantially equal to each other (the reference reflection amount Rs ≒ the actual reflection amount Ra) at the step S336, this control flow is terminated. In other words, there is no breakage or loss in the portion of the screen 380 corresponding to the coordinates (X, Y), so that the state flag G (X, Y) is maintained at 0, and this control flow is executed with respect to subsequent projection coordinates. Also when it is determined that the state where the reference reflection amount Rs ≠ the actual reflection amount Ra does not continue for at least the prescribed period of time at the step S337, this control flow is terminated and then is executed again. The step S337 is provided, whereby it is avoided that the reflected light (light receiving level P2) of the finger 1 through this VUI operation leads to the erroneous determination that "there is a breakage" or "there is contamination".

When determining that the state flag G (X, Y) = 1 at the coordinates (X, Y) at the step S332, this control flow is terminated. After the termination of this control flow, this control flow shown in Fig. 19 is executed again with respect to subsequent projection coordinates on the basis of an input image signal.

According to the third embodiment, the aforementioned processing operations at the steps S331 to S339 are sequentially performed on all projection coordinates constituting an image of one frame. The processing operations at the steps S331 to S339 are performed on images (picture) having frame numbers corresponding to the prescribed period of time at the step S337. Consequently, where in the screen 380 the broken portion 81 and the contaminated portion 82 are generated and which portion of the screen 380 is normal are determined. The detected troubled condition regarding the display of the screen 380 is acquired in the memory portion 38 (see Fig. 2) as the state map 305 regarding the display of the screen 380 shown in Fig. 17. This state map 305 is employed in the normal projection operation of the rear projector 300 described next.

A processing flow of the main control portion 31 for actually projecting the image 90 (picture) by the rear projector 300 is now described.

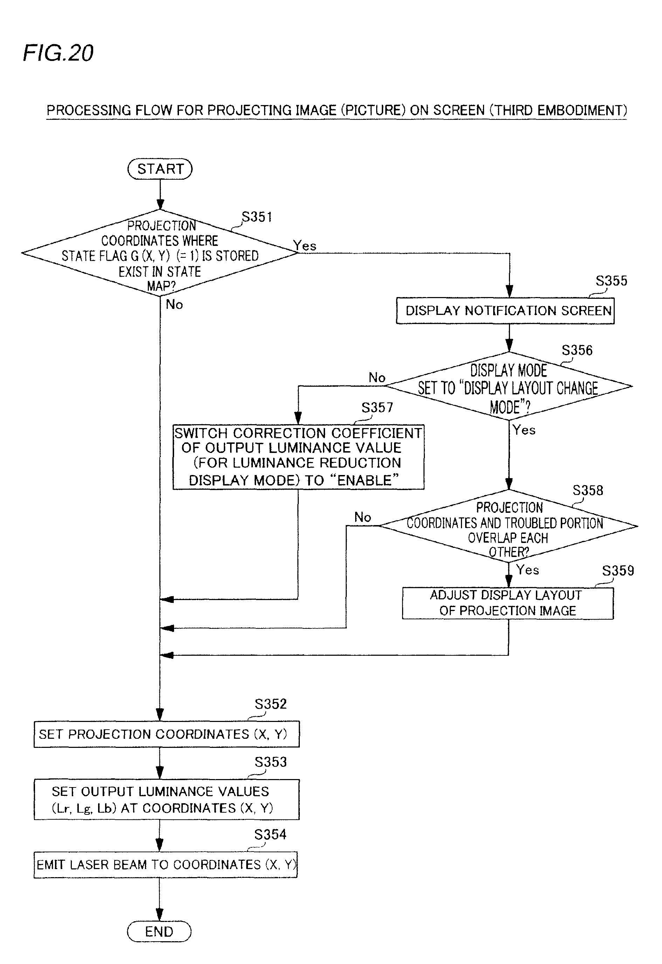

As shown in Fig. 20, first, the main control portion 31 (see Fig. 2) determines whether or not there is trouble on the current screen 380 (see Fig. 13) at a step S351. Specifically, the main control portion 31 determines whether or not there are projection coordinates where the state flag G (X, Y) (= 1) is stored in the state map 305 while referring to the state map 305 (see Fig. 17) regarding the display of the screen 380 in the memory portion 38 (see Fig. 2).

When determining that there is no trouble on the screen 380 (the state flag G (X, Y) (= 1) is not stored in the state map 305) at the step S351, the main control portion 31 sets the coordinates (X, Y) of the screen 380 on which the laser beam is projected on the basis of the image signal at a step S352. Then, the output (red: luminance value Lr, green: luminance value Lg, blue: luminance value Lb) of the laser beam of each color at the coordinates (X, Y) is set at a step S353. Then, in a state where the main control portion 31 sets the red LD portion 24, the green LD portion 25, and the blue LD portion 26 to the laser outputs corresponding to the luminance value Lr, the luminance value Lg, and the luminance value Lb, respectively, the laser beam is projected to a position corresponding to the coordinates (X, Y) of the screen 380 at a step S354, and this control flow is terminated. The projection portion 20 sequentially scans the entire projection area (each pixel from the coordinates (0, 0) to the coordinates (Xₘₐₓ, Yₘₐₓ)) of the screen 380, whereby the operations at the steps S352 to S354 are performed. Furthermore, the operations at the steps S352 to S354 are performed as needed during the external input of the image signal into the image processing portion 33 (see Fig. 2). Thus, the VUI screen 391 having the normal display layout shown in Fig. 14 and other pictures are projected on the screen 380.

When determining that there is trouble on the screen 380 (see Fig. 13) (the state flag G (X, Y) (= 1) is stored in the state map 305) at the step S351, the main control portion 31 (see Fig. 2) projects the notification screen 393 (see Fig. 15) on the screen 380 at a step S355.

Then, the main control portion 31 determines whether or not the display mode of the rear projector 300 is set to the "display layout change mode" in the case where the user selects the button image 394a (see Fig. 15) through the notification screen 393 at a step S356.

When the main control portion 31 determines that the display mode is not set to the "display layout change mode" at the step S356, the display control is switched to the operation mode (luminance reduction display mode) using the correction coefficient I of the output luminance value at a step S357. In other words, the luminance value of a pixel corresponding to the projection coordinates where the state flag G (X, Y) (= 1) is stored is switched to a luminance value in the "luminance reduction display mode" smaller than a normal luminance value. In this case, the corrected output (red: luminance value Lr*, green: luminance value Lg*, blue: luminance value Lb*) at the projection coordinates corresponding to the state flag G (X, Y) (= 1) is set. The luminance value of the pixel corresponding to the projection coordinates where the state flag G (X, Y) (= 0) is stored is maintained at the normal luminance value (red: luminance value Lr, green: luminance value Lg, blue: luminance value Lb). After this, the aforementioned operations at the steps S352 to S354 are performed.

When determining that the display mode is set to the "display layout change mode" at the step S356, the main control portion 31 (see Fig. 2) determines whether or not the projection coordinates on the screen 380 based on the externally input image signal and the coordinates (troubled portion) corresponding to the state flag G (X, Y) (= 1) overlap each other at a step S358. In other words, the main control portion 31 determines whether or not the projection coordinates constituting the VUI screen 391 shown in Fig. 14 and the coordinates corresponding to the broken portion 81 and the contaminated portion 82 shown in Fig. 16 overlap each other.

When determining that the projection coordinates on the screen 380 based on the externally input image signal and the coordinates (troubled portion) corresponding to the state flag G (X, Y) (= 1) do not overlap each other at the step S358, the main control portion 31 advances to the aforementioned steps S352 to S354. In other words, the image 90 is projected on the screen 380 without changing the display layout of the image 90 in this case.

When determining that the projection coordinates on the screen 380 based on the externally input image signal and the coordinates (troubled portion) corresponding to the state flag G (X, Y) (= 1) overlap each other at the step S358, the main control portion 31 changes the display layout of the image 90 at a step S359. Then, the main control portion 31 advances to the aforementioned steps S352 to S354. In other words, the VUI screen 391 whose display layout is changed shown in Fig. 16 is projected on the screen 380 in this case. In this manner, the projection operation of the rear projector 300 is performed.

According to the third embodiment, as hereinabove described, the rear projector 300 includes the main control portion 31 configured to perform control of projecting the image 90 on the screen 380 while avoiding the broken portion 81 and the contaminated portion 82 when the broken portion 81 and the contaminated portion 82 are detected on the screen 380, whereby the image 90 can be projected on the portion (the normal portion suitable for projection without the broken portion 81 or the contaminated portion 82) other than the portion unsuitable for projection while the portion unsuitable for projection is avoided when the portion unsuitable for the projection of the image 90 such as the broken portion 81 or the contaminated portion 82 is detected on the screen 380, unlike the case where the image 90 is projected on the entire screen 380 including the broken portion 81 and the contaminated portion 82 without avoiding the broken portion 81 and the contaminated portion 82. In other words, the image 90 can be projected on the normal portion of the screen 380 without the broken portion 81 or the contaminated portion 82 in the state where the completeness of information contained in the original entire image 90 is maintained without missing the information contained in the image 90 due to the projection on the broken portion 81 and the contaminated portion 82. When there are the broken portion 81, the contaminated portion 82, etc. on the screen 380, for example, the urgent information displayed when a disaster strikes in addition to the normal electronic advertisement, the VUI screen 391 displayed when a virtual user interface (VUI operation) function is added to the projector, etc. can continue to be projected on the normal portion suitable for projection in the state where the completeness of the display contents is maintained while the broken portion 81 and the contaminated portion 82 are avoided. Thus, the projection of the image 90 on the screen 380 can be continued without losing the completeness of the display contents even when there are the broken portion 81, the contaminated portion 82, etc. on the screen 380, and hence the rear projector 300 can be beneficially used.

According to the third embodiment, the rear projector 300 is configured to previously grasp the positional information (projection coordinates) of the broken portion 81 and the contaminated portion 82 unsuitable for projection on the screen 380 by scanning the laser beam in the X-Y plane by the projection portion 20 and sequentially detecting the laser beam reflected by the screen 380 through the VUI light receiving portion 34, and the main control portion 31 is configured to perform control of projecting the image 90 on the screen 380 while avoiding the broken portion 81 and the contaminated portion 82 on the basis of the positional information of the broken portion 81 and the contaminated portion 82 on the screen 380 when the broken portion 81 and the contaminated portion 82 are detected on the screen 380. Thus, on the basis of the previously grasped positional information (the positional information of the broken portion 81 and the contaminated portion 82) regarding the trouble of the screen 380, the image 90 can be easily projected on the screen 380 while the portion unsuitable for projection is avoided in the state where the completeness of the information contained in the original entire image 90 is maintained.

According to the third embodiment, the rear projector 300 is configured to be capable of accepting the apparatus operation on the basis of the detection result of the laser beam reflected by the finger 1 (or the touch pen) obtained by the VUI light receiving portion 34, and the image 90 contains the VUI screen 391 configured to be capable of accepting the apparatus operation performed by the user on the basis of the detection result of the laser beam reflected by the finger 1 obtained by the VUI light receiving portion 34. Furthermore, the main control portion 31 is configured to perform control of projecting the VUI screen 391 on the screen 380 while avoiding the broken portion 81 and the contaminated portion 82 when the broken portion 81 and the contaminated portion 82 are detected on the screen 380. Thus, the projection of the VUI screen 391 on the screen 380 can be continued in the state where the completeness of the display contents such as the button images 392a to 392e, the message, etc. contained in the VUI screen 391 projected on the screen 380 is maintained when the virtual user interface (VUI operation) function is added to the projector. Therefore, a situation in which the VUI screen 391 is not properly displayed and the VUI operation is interrupted due to the broken portion 81, the contaminated portion 82, etc. of the screen 380 and a situation in which an erroneous operation is performed due to the false recognition of the VUI screen 391 (button images 392a to 392e) by the user can be avoided, and hence the projection of the image 90 on the screen 380 can be continued without losing the completeness of the display contents contained in the VUI screen 391 also in the rear projector 300 having the VUI function.

According to the third embodiment, the rear projector 300 is configured to notify the user that the broken portion 81 and the contaminated portion 82 are detected through the notification screen 393 when the broken portion 81 and the contaminated portion 82 are detected on the screen 380, and the user can select whether or not to perform control of projecting the image 90 on the screen 380 while avoiding the broken portion 81 and the contaminated portion 82 through the notification screen 393 when the broken portion 81 and the contaminated portion 82 are detected on the screen 380. Thus, the user viewing the image 90 (picture) can be reliably notified of the detection result of the presence or absence of trouble (a breakage, contamination, etc.) on the screen 380 obtained by the VUI light receiving portion 34 through the notification screen 393. Furthermore, the user can determine whether or not to shift the operation mode to the operation mode in which the image 90 is projected on the screen 380 while the troubled portion (the broken portion 81 and the contaminated portion 82) unsuitable for projection is avoided on the basis of the operation of notifying that the broken portion 81 and the contaminated portion 82 are detected. Therefore, the user can view the projected image 90 (picture) and operate the VUI screen 391 while becoming aware of the trouble of the screen 380.

According to the third embodiment, the main control portion 31 is configured to perform control of projecting the notification screen 393 asking the user whether or not to perform control of projecting the image 90 on the screen 380 while avoiding the broken portion 81 and the contaminated portion 82 on the screen 380, while avoiding the broken portion 81 and the contaminated portion 82 when the broken portion 81 and the contaminated portion 82 are detected on the screen 380. Thus, the notification screen 393 can be projected on the normal portion of the screen 380 in the state where the completeness of the information is maintained without damaging the notification screen 393 due to the projection on the broken portion 81 and the contaminated portion 82 of the screen 380 when the notification screen 393 is projected on the screen 380, and hence the user can correctly recognize the contents of the notification screen 393.

According to the third embodiment, the reference reflection amount Rs of the screen 380 without the broken portion 81 or the contaminated portion 82 is previously acquired by emitting the laser beam to the screen 380 without the broken portion 81 or the contaminated portion 82 and detecting the laser beam reflected by the screen 380 by the VUI light receiving portion 34, and the main control portion 31 is configured to perform control of determining the broken portion 81 and the contaminated portion 82 of the screen 380 on the basis of the comparison result of the actual reflection amount Ra of the laser beam reflected by the screen 380, detected by the VUI light receiving portion 34 in the state where the projection portion 20 projects the image 90 on the screen 380 and the reference reflection amount Rs. Thus, the actual reflection amount Ra of the laser beam from the screen 380 can be compared with the reference reflection amount Rs of the laser beam from the screen 380 without the broken portion 81, the contaminated portion 82, or the like when the presence or absence of trouble (the broken portion 81 and the contaminated portion 82) is actually detected, and hence the presence or absence of trouble on the screen 380 can be reliably and easily detected.

According to the third embodiment, the main control portion 31 is configured to perform control of projecting the image 90 on the screen 380 while avoiding the broken portion 81 and the contaminated portion 82 and control of allowing the user to visually recognize the broken portion 81 and the contaminated portion 82 by illuminating the light red broken lines 85 surrounding the portions of the screen 380 corresponding to the outer peripheries of the broken portion 81 and the contaminated portion 82 when detecting the broken portion 81 and the contaminated portion 82 on the screen 380 on the basis of the detection result of the laser beam reflected by the screen 380 obtained by the VUI light receiving portion 34. Thus, the projection of the image 90 on the normal portion (the portion suitable for projection without the broken portion 81 or the contaminated portion 82) of the screen 380 can be continued while the completeness of the information such as the display contents contained in the original entire image 90 is maintained, and the user can be promptly notified of the troubled portions (positions) of the screen 380 such as the broken portion 81 and the contaminated portion 82 by displaying the light red broken lines 85. Therefore, the user can be reliably notified that the repair of the screen 380 is required. Furthermore, the user can easily specify the broken portion 81 and the contaminated portion 82 (regions surrounded by the broken lines 85) on the screen 380, and hence the screen 380 can be easily repaired.

According to the third embodiment, the main control portion 31 is configured to perform control of changing the display layout such that the image 90 is displayed on the portion (normal portion) other than the broken portion 81 and the contaminated portion 82 and projecting the image 90 on the screen 380 in the case where the main control portion 31 determines that the image 90 overlaps the broken portion 81 and the contaminated portion 82 when the broken portion 81 and the contaminated portion 82 are detected on the screen 380. Thus, the image 90 whose display layout is changed can be reliably projected on the portion (the normal portion suitable for projection without the broken portion 81 or the contaminated portion 82) other than the portion of the screen 380 unsuitable for projection such as the broken portion 81 or the contaminated portion 82 without overlapping the portion unsuitable for projection.

According to the third embodiment, the screen 380 includes the transmissive screen through which the laser beam emitted from a first side (Z2 side) of the screen 380 by the projection portion 20 can penetrate to a second side (Z1 side) of the screen 380, and the main control portion 31 is configured to perform control of accepting the VUI operation on the basis of the detection result, obtained by the VUI light receiving portion 34, of the laser beam emitted from the first side (Z2 side), penetrating through the screen 380, and thereafter being reflected to the first side (Z2 side) by the finger 1, the touch pen, or the like arranged on the second side (Z1 side), penetrating through the screen 380 and control of detecting the breakage of the screen 380 on the basis of the detection result, obtained by the VUI light receiving portion 34, of the laser beam emitted from the first side (Z2 side), reflected to the first side (Z2 side) by the screen 380. Thus, in the rear projector 300 configured such that the image 90 (the VUI screen 391 and the notification screen 393) projected on the screen 380 from the rear side (Z2 side) of the screen 380 can be viewed from the front side (Z1 side) of the screen 380 and the VUI operation can be performed through the VUI screen 391 and the notification screen 393, the projection of the image 90 on the screen 380 can be easily continued without losing the completeness of the display contents even when there are the broken portion 81 and the contaminated portion 82 on the screen 380.

### (Fourth Embodiment)

A fourth embodiment is now described with reference to Figs. 6, 13, 17, and 21. In this fourth embodiment, a rear projector 400 is configured to start a "breakage detection operation mode" of a screen 380 when an apparatus body 10 detects an impact during the projection of an image 90 (picture) on the screen 380. The rear projector 400 is an example of the "projector" in the present invention. In the figures, a structure similar to that of the rear projector 300 according to the aforementioned third embodiment is denoted by the same reference numerals.

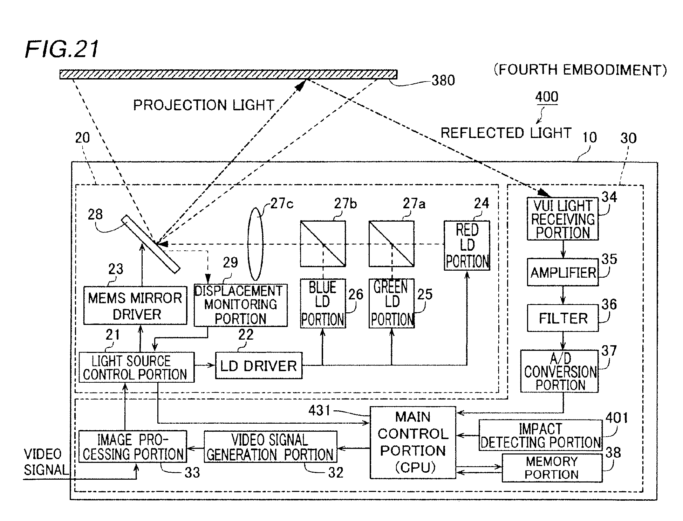

The rear projector 400 according to the fourth embodiment of the present invention includes an impact detecting portion 401, as shown in Fig. 21. The impact detecting portion 401 is mounted on a prescribed position in the apparatus body 10 and is electrically connected to a main control portion 431. The rear projector 400 is configured such that an output signal is input into the main control portion 431 when the impact detecting portion 401 detects the impact. The main control portion 431 is an example of the "control portion" in the present invention.

According to the fourth embodiment, the rear projector 400 is configured to detect the broken condition (the presence or absence of breakage) of the screen 380 on the basis of a detection result of a laser beam reflected by the screen 380 obtained by a VUI light receiving portion 34 when the impact detecting portion 401 detects the impact. Furthermore, the rear projector 400 is configured to emit a laser beam from each of a red LD portion 24, a green LD portion 25, and a blue LD portion 26 at an output corresponding to a 255th gradation (maximum luminance) corresponding to an "all-white image" and detect the broken condition (the presence or absence of breakage) of the screen 380 on the basis of the detection result of the laser beam (reflected light) at the maximum luminance reflected by the screen 380 obtained by the VUI light receiving portion 34 when the breakage of the screen 380 is detected.

A processing flow of the main control portion 431 at the time when the impact is applied to the apparatus body 10 during the projection of the image 90 (picture) on the screen 380 by the rear projector 400 according to the fourth embodiment is now described with reference to Figs. 6, 11, 12, 20 and 21.

Also according to the fourth embodiment, first, the laser beam is emitted to the screen 380 without a breakage, a defect, or the like, and the reflected light (reference reflection amount Rs) reflected by the screen 380 is automatically measured by the VUI light receiving portion 34 when the apparatus body 10 is powered at the time of factory shipment inspection performed immediately after the rear projector 400 is assembled, as shown in Fig. 21. However, the range (data amount) of acquisition data of the reference reflection amount Rs is different from that in the aforementioned third embodiment.

At each of steps S1, S2, and S3 shown in Fig. 6, the reflection amount data (reference reflection amount Rs) that the screen 380 without a breakage has is acquired. In a specific method for that, the steps S51 to S60 shown in Fig. 11 in the aforementioned second embodiment are executed as an initialization operation with respect to each of an R-color (red color), a G-color (green color), and a B-color (blue color). According to the fourth embodiment, only the reference reflection amount Rs of the "all-white image" that is one gradation value is accumulated in a memory portion 38 (see Fig. 21), and hence the data accumulation amount in the memory portion 38 in this case is suppressed to one-255th of the data accumulation amount in the memory portion 38 according to the third embodiment.

In a processing flow of the main control portion 431 for actually projecting the image 90 by the rear projector 400, the steps S71 to S82 shown in Fig. 12 in the aforementioned second embodiment are performed similarly. However, the corrupt flag F (X, Y) described at the steps S77 and S78 in Fig. 12 is replaced by a "state flag G (X, Y)" in the rear projector 400, and the processing is performed.

In the rear projector 400, a normal projection operation is temporarily interrupted, and processing operations (breakage detection operation) at the aforementioned steps S71 to S82 (see Fig. 12) are executed as interrupt processing when the impact on the apparatus body 10 is detected. After these processing operations are terminated, the processing returns to the normal projection operation shown in Fig. 20. The remaining structure of the rear projector 400 according to the fourth embodiment is similar to that of the rear projector 100 according to the aforementioned first embodiment.

According to the fourth embodiment, as hereinabove described, the rear projector 400 is provided with the impact detecting portion 401 configured to detect the impact on the apparatus body 10, and the main control portion 431 is configured to perform control of detecting a broken portion 81 of the screen 380 unsuitable for projection on the basis of the detection result of the laser beam reflected by the screen 380 obtained by the VUI light receiving portion 34 and control of projecting the image on the screen 380 while avoiding the portion unsuitable for projection in the case where the portion unsuitable for projection is detected on the screen 380, when the impact detecting portion 401 detects the impact. Thus, the broken condition (the presence or absence of breakage) of the screen 380 can be detected using the detection of the impact by the impact detecting portion 401 as a trigger, and hence the trouble of the screen 380 can be promptly detected in synchronization with the timing at which impact force likely to cause the breakage of the screen 380 is applied.

According to the fourth embodiment, the main control portion 431 is configured to perform control of emitting each of the red, green, and blue laser beams at the output corresponding to the 255th gradation (maximum luminance) corresponding to the "all-white image" and detecting the breakage of the screen 380 on the basis of the detection result of the laser beam (255th gradation) reflected by the screen 380 obtained by the VUI light receiving portion 34 when the impact detecting portion 401 detects the impact. Thus, the actual reflection amount Ra of the laser beam from the screen 380 at the maximum luminance at which the projected image 90 is displayed most brightly as the "all-white image" can be detected, and hence the slightly broken portion 81, a lost portion (not shown), etc. of the screen 380 caused by the impact force can be reliably detected. The remaining effects of the fourth embodiment are similar to those of the aforementioned third embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the reference refection amount Rs from the screen 80 (380) is acquired in the entire projection area (each pixel from the coordinates (0, 0) to the coordinates (Xₘₐₓ, Yₘₐₓ)) when the reference reflection amount Rs of the screen 80 (380) without a breakage (loss and trouble) is previously acquired in each of the aforementioned first to fourth embodiments, the present invention is not restricted to this. The reference reflection amount Rs from the screen 80 (380) at a projection position corresponding to pixels at each prescribed interval (20-pixel interval) may alternatively be acquired, for example. Alternatively, the projection area may be divided into nine areas of an "upper left area", an "upper middle area", an "upper right area", a "middle left area", a "central area", a "middle right area", a "lower left area", a "lower middle area", and a "lower right area", and the reference reflection amounts Rs from the screen 80 (380) at positions corresponding to pixels at a central portion and its vicinity of each area may be acquired. In this case, an average value (one piece of data) of the reference reflection amounts Rs acquired in the central portions and their vicinities of the areas may be regarded as the reference reflection amount Rs of the entire projection area. The rear projector is configured according to this modification, whereby the amount of data accumulated in the memory portion 38 can be significantly reduced as compared with the case where the reference reflection amount Rs at the entire projection area (the position corresponding to each pixel from the coordinates (0, 0) to the coordinates (Xₘₐₓ, Yₘₐₓ)) of the screen 80 (380) is sequentially acquired. Furthermore, the reflection amount level from the screen 80 (380) is relatively different in each of the "upper left area", the "upper middle area", the "upper right area", the "middle left area", the "central area", the "middle right area", the "lower left area", the "lower middle area", and the "lower right area" of the screen 80 (380) in relation to the projection density of the laser beam in view of the driving of the MEMS mirror 28 with a sine wave. Therefore, it is more preferable that the reference reflection amount Rs be acquired using an average value (central value) in one specified area, and the reference reflection amounts Rs corresponding to all projection coordinates be acquired point by point in another specified area. Thus, the detailed reference reflection amount Rs can be acquired with respect to a projection area requiring greater reference reflection amounts Rs (information amounts) while the amount of data accumulated in the memory portion 38 is reduced.

While the reference reflection amount Rs from the screen 80 or 380 is acquired with respect to the luminance value corresponding to all the gradations (255 gradations) from the 1st gradation to the 255th gradation when the reference reflection amount Rs of the screen 80 or 380 without a breakage (loss) or trouble is previously acquired in each of the aforementioned first to third embodiments, the present invention is not restricted to this. The reference reflection amount Rs from the screen 80 or 380 may alternatively be acquired by emitting a laser beam at an output adjusted at each prescribed gradation interval (10-gradation interval, for example), for example. The reference reflection amount Rs at a gradation value that is not acquired may be obtained by interpolating the reference reflection amount Rs at a gradation value acquired nearby on the basis of the characteristics of the reflection amount of the screen 80 (380). The rear projector is configured according to this modification, whereby the amount of data accumulated in the memory portion 38 can be significantly reduced as compared with the case where the reference reflection amounts Rs corresponding to all the gradations are sequentially acquired.

While the reference refection amount Rs from the screen 80 (380) is acquired in the entire projection area (each pixel from the coordinates (0, 0) to the coordinates (Xₘₐₓ, Yₘₐₓ)) when the reference reflection amount Rs of the screen 80 (380) without a breakage (loss and trouble) is previously acquired and all the data is accumulated in the memory portion 38 in each of the aforementioned first to fourth embodiments, the present invention is not restricted to this. The average value (one piece of data) of all the data may alternatively be stored in the memory portion 38 when the temporarily acquired reference reflection amounts Rs of the entire projection area do not have variation but uniformity in a prescribed range, for example.

While the reference reflection amount Rs of each color from the screen 80 (380) is acquired employing all the three RGB primary colors at the 255th gradation corresponding to the "all-white image" and the actual reflection amount Ra is measured employing all the three RGB primary colors at the 255th gradation also when the breakage of the screen 80 (380) is detected using the detection of the impact by the impact detecting portion 201 (401) as a trigger in each of the aforementioned second and fourth embodiments, the present invention is not restricted to this. The reference reflection amount Rs of the laser beam at a prescribed gradation may alternatively be acquired by driving only one or two light source portions of the red LD portion 24, the green LD portion 25, and the blue LD portion 26, and the breakage of the screen 80 (380) may alternatively be detected by driving only the same light source portion(s) used when the reference reflection amount Rs is acquired, when the impact detecting portion 201 (401) detects the impact, for example.

While the reference reflection amount Rs of the screen 80 (380) is acquired at the time of factory shipment inspection performed immediately after the rear projector 100 (200, 300, 400) is assembled in each of the aforementioned first to fourth embodiments, the present invention is not restricted to this. In addition to the automatic acquisition of the reference reflection amount Rs at the time of factory shipment inspection, the reference reflection amount Rs of the screen 80 (380) may alternatively be reacquired and updated in the memory portion 38 (database) when the rear projector 100 (200, 300, 400) is powered for use according to the number of times that the user has used the rear projector 100 (200, 300, 400) or the like, for example. In other words, even if there is no breakage (loss) or the like in the screen 80 (380), contamination such as dust may be attached to the screen 80 (380) with an increase in the period of use of the rear projector 100 (200, 300, 400). In this case, if the broken condition (the presence or absence of breakage) of the screen 80 (380) is detected later using only the reference reflection amount Rs acquired at the time of factory shipment inspection, it is erroneously determined that "there is a breakage" even in the case where the actual reflection amount Ra is reduced due to the contamination of the screen 80 (380). Therefore, the reference reflection amount Rs is reacquired and updated in the memory portion 38 when the rear projector 100 (200, 300, 400) is powered for use according to the number of times that the user has used the rear projector 100 (200, 300, 400) or the like as in this modification, whereby the erroneous determination due the contamination such as dust can be suppressed.

While the breakage of the screen 80 (380) is detected on the basis of the detection result of the laser beam reflected by the screen 80 (380) obtained by the VUI light receiving portion 34 when the impact detecting portion 201 (401) detects the impact during the projection of the image 90 in each of the aforementioned second and fourth embodiments, the present invention is not restricted to this. During the projection of the image 90, the "all-white image" may alternatively be periodically projected, and the breakage of the screen 80 (380) may alternatively be detected on the basis of the detection result of the laser beam reflected by the screen 80 (380) obtained by the VUI light receiving portion 34 even when the impact is not detected.

While the impact on the apparatus body 10 is detected by the impact detecting portion 201 (401) in each of the aforementioned second and fourth embodiments, the present invention is not restricted to this. The impact on the apparatus body 10 may alternatively be detected by the displacement monitoring portion 29 (see Fig. 10) detecting the displacement (posture) of the MEMS mirror 28 in real time, for example. In this modification, the displacement monitoring portion 29 is an example of the "impact detecting portion" in the present invention.

While each of the red, green, and blue laser beams is emitted at the output corresponding to the 255th gradation (maximum luminance) corresponding to the "all-white image" and the breakage (trouble) of the screen 80 (380) is detected on the basis of the detection result of the laser beam (255th gradation) reflected by the screen 80 (380) obtained by the VUI light receiving portion 34 when the impact detecting portion 201 (401) detects the impact in each of the aforementioned second and fourth embodiments, the present invention is not restricted to this. The breakage (trouble) of the screen 80 (380) may alternatively be detected by projecting an "inspection image" whose R-color luminance value, G-color luminance value, and B-color luminance value each have a prescribed gradation value, other than the "all-white image", on the screen 80 (380).

While the present invention is applied to the rear projector 100 (200, 300, 400) having the apparatus body 10 (housing 50) integrated with the screen 80 (380) in each of the aforementioned first to fourth embodiments, the present invention is not restricted to this. The present invention may alternatively be applied to a projector projecting an image (picture) on a screen hung from an indoor ceiling or a screen placed separately from an apparatus body such as a screen placed on a floor in a standing state, for example. In this case, the screen may or may not be transmissive. In other words, a projector capable of projecting an image (picture) on a screen from the front side (display surface side) of the screen viewed by a user may be configured to be capable of detecting the breakage of the screen on the basis of a detection result of a laser beam reflected by the screen effectively utilizing the "light detecting portion" according to the present invention provided in this projector, so far as the projector has the VUI operation function allowing the user to perform an input operation on a displayed VUI screen with his/her finger, the touch pen, or the like. In the case where the image is projected on the screen placed separately, the "impact detecting portion" according to the present invention taken out of the projector may be mounted on the screen. Thus, the projector can operate substantially similarly to the projector according to each of the aforementioned second and fourth embodiments, and the broken condition (the presence or absence of breakage and contamination) of the screen can be promptly detected in synchronization with the timing at which impact force is applied to the screen placed separately.

While the display layout of the VUI screen 391 is changed and the VUI screen 391 is projected on the screen 380 when there are both the broken portion 81 and the contaminated portion 82 on the screen 380 (see Fig. 16) in each of the aforementioned third and fourth embodiments, the present invention is not restricted to this. In other words, the VUI screen 391 (image 90) may alternatively be projected while these troubled portions are avoided even when there is only the broken portion 81 or the contaminated portion 82 on the screen 380.

While the display layout of the VUI screen 391 is changed from the state shown in Fig. 14 to the state shown in Fig. 16 and the VUI screen 391 is projected on the screen 380 when the VUI screen 391 (button images 392c, 392d, and 392e in Fig. 16) partially overlaps the broken portion 81 and the contaminated portion 82 in each of the aforementioned third and fourth embodiments, the present invention is not restricted to this. An image to be projected may alternatively be projected on the screen 380 without changing the display layout of the image to be projected when the image to be projected does not overlap the broken portion 81 or the contaminated portion 82, for example. According to the present invention, the rear projector 300 (400) may alternatively be configured to project the image to be projected while avoiding the broken portion 81 and the contaminated portion 82 without changing the display layout.

While the light red broken lines 85 surrounding the portions of the screen 380 corresponding to the outer peripheries of the broken portion 81 and the contaminated portion 82 are illuminated in each of the aforementioned third and fourth embodiments, the present invention is not restricted to this. Another method other than the above may alternatively be employed so far as the same is a method for displaying the broken portion 81 and the contaminated portion 82 in a visually recognizable manner.

While the control processing performed by the main control portion 31 (231, 431) is described, using the flowchart described in a flow-driven manner in which processing is performed in order along a processing flow for the convenience of illustration in each of the aforementioned first to fourth embodiments, the present invention is not restricted to this. According to the present invention, the processing performed by the main control portion 31 (231, 431) may alternatively be performed in an event-driven manner in which processing is performed on an event basis. In this case, the processing performed by the main control portion 31 (231, 431) may be performed in a complete event-driven manner or in a combination of an event-driven manner and a flow-driven manner.

## Claims

1. A projector (100, 200, 300, 400) comprising:
a laser beam generation portion (24, 25, 26) emitting a laser beam;
a projection portion (20) projecting an image (90) on a screen (80, 380) by scanning the laser beam emitted from the laser beam generation portion;
a light detecting portion (34) detecting at least the laser beam reflected by a detection object (1); and
a control portion (31, 231, 431) configured to perform control of accepting an apparatus operation on the basis of a detection result of the laser beam reflected by the detection object obtained by the light detecting portion and control of detecting a breakage of the screen on the basis of a detection result of the laser beam reflected by the screen obtained by the light detecting portion.

2. The projector according to claim 1, further comprising a storage portion (38) previously storing a reference reflection amount of the laser beam reflected by the screen, detected by the light detecting portion, wherein
the control portion is configured to perform control of determining the breakage of the screen on the basis of a comparison result of an actual reflection amount of the laser beam reflected by the screen, detected by the light detecting portion in a state where the projection portion projects the image on the screen and the reference reflection amount stored in the storage portion.

3. The projector according to claim 2, configured to previously acquire the reference reflection amount as a reflection amount of the screen without a breakage by emitting the laser beam to the screen without a breakage and detecting the laser beam reflected by the screen through the light detecting portion, wherein
the control portion is configured to perform control of determining the breakage of the screen on the basis of the comparison result of the actual reflection amount of the laser beam reflected by the screen, detected by the light detecting portion in the state where the projection portion projects the image on the screen and the reference reflection amount.

4. The projector according to claim 2 or 3, wherein
the control portion is configured to determine that there is a breakage in the screen when determining that a state where there is a difference between the reference reflection amount and the actual reflection amount continues for at least a prescribed period of time.

5. The projector according to any of claims 1 to 4, wherein
the control portion is configured to perform control of reducing a luminance of the laser beam emitted to a broken portion of the screen in the image projected on the screen or control of stopping emission of the laser beam to the broken portion of the screen and perform control of continuing projection of the image on a portion of the screen other than the broken portion when determining that there is a breakage in the screen.

6. The projector according to any of claims 1 to 5, further comprising an impact detecting portion (29, 201, 401) detecting an impact, wherein
the control portion is configured to perform control of detecting the breakage of the screen on the basis of the detection result of the laser beam reflected by the screen obtained by the light detecting portion when the impact detecting portion detects the impact.

7. The projector according to claim 6, wherein
the control portion is configured to perform control of emitting the laser beam at an output corresponding to a maximum luminance and detecting the breakage of the screen on the basis of the detection result of the laser beam reflected by the screen obtained by the light detecting portion when the impact detecting portion detects the impact.

8. The projector according to claim 5, wherein
a user can select the control of reducing the luminance of the laser beam emitted to the broken portion of the screen in the image projected on the screen or the control of stopping the emission of the laser beam to the broken portion of the screen.

9. The projector according to any of claims 1 to 8, wherein
the control portion is configured to perform control of detecting the breakage of the screen on the basis of the detection result of the laser beam reflected by the screen obtained by the light detecting portion when the projection portion projects the image on the screen.

10. The projector according to any of claims 1 to 9, wherein
the image is constituted by a plurality of pixels each having a prescribed luminance value, and
the control portion is configured to perform control of detecting the breakage of the screen on the basis of the detection result of the laser beam reflected by the screen obtained by the light detecting portion for each of the plurality of pixels.

11. The projector according to any of claims 1 to 10, wherein
the screen includes a transmissive screen (80, 380) through which the laser beam emitted from a first side of the screen by the projection portion can penetrate to a second side of the screen, and
the control portion is configured to perform control of accepting the apparatus operation on the basis of a detection result, obtained by the light detecting portion, of the laser beam emitted from the first side, penetrating through the transmissive screen, and thereafter being reflected to the first side by the detection object arranged on the second side, penetrating through the transmissive screen and control of detecting the breakage of the screen on the basis of the detection result, obtained by the light detecting portion, of the laser beam emitted from the first side, reflected to the first side by the transmissive screen.

12. The projector according to any of claims 1 to 11, wherein
the control portion is configured to perform control of projecting the image on the screen while avoiding a portion unsuitable for projection of the image when at least one of a broken portion (81) and a contaminated portion (82) included in the portion unsuitable for projection is detected on the screen on the basis of the detection result of the laser beam reflected by the screen (380) obtained by the light detecting portion.

13. The projector according to claim 12, configured to previously grasp positional information of the portion unsuitable for projection on the screen by scanning the laser beam by the projection portion and sequentially detecting the laser beam reflected by the screen through the light detecting portion, wherein
the control portion is configured to perform control of projecting the image on the screen while avoiding the portion unsuitable for projection on the basis of the positional information of the portion unsuitable for projection on the screen when the portion unsuitable for projection is detected on the screen.

14. The projector according to claim 12 or 13, configured to be capable of accepting the apparatus operation on the basis of the detection result of the laser beam reflected by the detection object obtained by the light detecting portion, wherein
the image contains an operation screen (391, 393, 395) configured to be capable of accepting the apparatus operation performed by a user on the basis of the detection result of the laser beam reflected by the detection object obtained by the light detecting portion, and
the control portion is configured to perform control of projecting the operation screen on the screen while avoiding the portion unsuitable for projection when the portion unsuitable for projection is detected on the screen.

15. The projector according to any of claims 12 to 14, configured to notify a user that the portion unsuitable for projection is detected when the portion unsuitable for projection is detected on the screen, wherein
the user can select whether or not to perform control of projecting the image on the screen while avoiding the portion unsuitable for projection when the portion unsuitable for projection is detected on the screen.
